# EUROPEAN PATENT APPLICATION

(11) **EP 2 460 610 A1**
(43) Date of publication of application: **06.06.2012**
(21) Application number: 10789351.3
(22) Date of filing: 26.05.2010
(51) Int. Cl.: B23B 31/117

(54) **MECHANISM FOR GRASPING TOOL, CHUCK, CLAMPING MECHANISM OR THE LIKE**

(30) Priority: 15.06.2009 JP 2009141888
(71) Applicant: Kanematsu, Minoru, Okazaki-shi, Aichi 444-0062 (JP)
(72) Inventor: Kanematsu, Minoru, Okazaki-shi, Aichi 444-0062 (JP)
(74) Representative: HOFFMANN EITLE
(86) International application number: PCT/JP2010/058879
(87) International publication number: WO 2010/146976

(57) **Abstract**

Provided are: a double grasping mechanism including a double grasped part and a double gripping mechanism; a spindle, a holder holding mechanism, a main-spindle, and a holder holding device each including a double gripping mechanism; and a tool holder; a chuck holder; and a clamp holder.

The double grasped part is formed by an outer pull stud (11) and an inner pull stud (22/32/42/55). The double gripping mechanism is formed by: an outer gripping mechanism including an outer large-diameter part (90e), an outer small-diameter part (90g), an outer draw bar (85), and outer balls (92a); and an inner gripping mechanism including an inner large-diameter part (85b), an inner small-diameter part (85c), an inner draw bar (84), and inner balls (92b). The tool holder (2a/2b/2c) includes the outer pull stud (11). The chuck holder (6a/6b/6c/6d) includes the outer pull stud (11) and the inner pull stud (22/32). The clamp holder (8a/8b) includes the outer pull stud (11) and the inner pull stud (42/55).

## Description

### TECHNICAL FIELD

The present invention relates to a grasping mechanism configured so that it is possible to attach any of a tool, a chuck, and a clamp mechanism (hereinafter, "a chuck and the like") to a spindle used as a main-spindle in a machine tool. The present invention relates to a configuration in which many types of attachments such as a chuck and the like are attachable to and detachable from mutually the same spindle, so as to be able to perform many types of processing or many steps of processing by using a single machine.

### BACKGROUND ART

Conventionally, there have been inventions related to a spindle to be used with a tool (see, for example. Patent Document 1). According to these inventions, however, although the spindle is able to hold a pull stud of a tool holder, it is not possible to attach a chuck or a clamp mechanism to the spindle.
There have also been inventions related to a spindle to be used with a chuck (see, for example, Patent Document 2). According to these inventions, however, although it is possible to attach a chuck to the spindle, the spindle is not able to hold a pull stud of a tool holder or a clamp mechanism.

That is because, conventionally, machine tools such as milling machines in which a tool is attached to a main-spindle when performing processing are considered to be different types of machines from machine tools such as lathes and grinding machines in which a workpiece is attached to a main-spindle when performing processing. Thus, each of the main- spindles is configured so as to fit the purpose of use and the application.

However, if a single machine tool is able to perform many types of processing including lathe-turning and milling and is further able to perform many steps of processing while changing the configuration of the main-spindle, (e.g., if the machine tool is able to perform processing on one side of a workpiece with a chuck attached to a main-spindle and to subsequently hold the processed side of the workpiece with another chuck or a clamp mechanism, so as to perform processing on another side of the workpiece with another tool attached to the main-spindle), it means that the single machine tool is able to perform the processing that is conventionally performer by two or more machine tools.

A chuck is able to grip only a workpiece having a circular shape. However, if it is possible to attach a clamp mechanism to a main-spindle, it means that it is possible to grasp a workpiece having any of various shapes including polygons and ovals. It is therefore possible to perform the processing without being restricted by the shapes of workpieces.

Further, a conventional spindle to which a tool can be attached has a tapered bore formed in the shaft, so that a tapered shank of the tool can be inserted and held therein. However, because there is a limit to the size of the tapered bore, a problem arises where it is difficult to achieve a joining strength that can withstand a heavy cutting process.

Further, there has been an invention (see, for example Patent Document 3) to achieve a joining strength that can withstand a heavy cutting process by forming a joining structure realized by planar contacts in two places, i.e., a planar contact between a tapered surface of a shaft and a tapered surface of a sleeve attached to a shank of a tool holder; and a planar contact between an end face of the shaft and an end face of a flange of the tool holder.

This invention, however, is based on the feature where the sleeve is attached to the tool holder. It is therefore necessary to attach a sleeve to each tool holder. Consequently, it is difficult to have a configuration where many types of tool holders, chuck holders, and clamp holders (hereinafter, "holders") are attachable/detachable. Further, when the tapered surface of the shaft is damaged, it is necessary to replace the shaft of the spindle. Thus, another problem arises where a large amount of labor is required.

Further, a super-heaving cutting process becomes possible when a joining structure is realized by planar contacts in two places that are not in the bore of a shaft but are in positions distant from the shaft center, i.e., a planar contact between a tapered surface provided on the outer circumference of the shaft and a tapered inner surface of each of the holders, and a planar contact between an abutting surface of the shaft and an abutted surface of each of the holders. However, no such invention is known.

### CITATION LIST

### PATENT LITERATURE

Patent Document 1: Japanese Patent Application Laid-open No. 2005-279874
Patent Document 2: Japanese Granted Patent No. 3724240
Patent Document 3: Japanese Patent Application Laid-open No. H08-90315

### SUMMARY OF INVENTION

### TECHNICAL PROBLEM

An object is to provide a double grasping mechanism that makes it possible to attach many types of attachments such as a chuck and the like to mutually the same spindle, for the purpose of obtaining a machine tool with which it is possible to perform many types of processing, many steps of processing, and processing on workpieces in various shapes.

Another object is to provide a grasping mechanism for a chuck and the like that is usable in a heavy cutting process, by joining the spindle and each of the holders together by planar contacts in two places, while simplifying the configurations of the holders by eliminating the need to attach a sleeve to each of the holders.
Yet another object is to provide and utilize a holder holding mechanism and a holder holding device each including the double grasping mechanism and/or the joining structure realized by the planar contacts in two places.

### SOLUTION TO PROBLEM

A double grasped part is formed by an outer grasped part and an inner grasped part, while a double gripping mechanism is formed by an outer gripping mechanism and an inner gripping mechanism. Further, a double grasping mechanism is formed by an outer grasping mechanism including the outer grasped part and the outer gripping mechanism, and an inner grasping mechanism including the inner grasped part and the inner gripping mechanism.

While the side on which a chuck or the like is attached to the grasping mechanism is defined as a front side, the outer gripping mechanism includes an outer draw bar, whereas the inner gripping mechanism includes an inner draw bar. A portion of the outer draw bar near an end thereof on the front side is formed as a circular cylindrical part that has a plurality of ball holes therein so that outer balls are provided while being held so as to be movable in a normal line direction. Further, a portion of the inner draw bar near an end thereof on the front side is formed as a circular cylindrical part that has a plurality of ball holes therein so that inner balls are provided while being held so as to be movable in a normal line direction.

While the outer gripping mechanism and the inner gripping mechanism are each in an open state, the outer grasped part is inserted into the outer gripping mechanism, whereas the inner grasped part is inserted into the inner gripping mechanism, and upon moving the outer draw bar toward the rear side, the outer balls move toward the outer grasped part so as to achieve a grasped state in which the outer grasped part is grasped by the outer gripping mechanism. Further, upon moving the inner draw bar toward the rear side, the inner balls move toward the inner grasped part so as to achieve a grasped state in which the inner grasped part is grasped by the inner gripping mechanism.

Further, the shaft of a spindle is provided with an inner sleeve having a tapered inner surface so as to achieve close contacts in two places i.e., between a tapered outer surface of each of the holders and the tapered inner surface of the inner sleeve, and between an abutting surface of the shaft and an abutted surface of each of the holders. Further, the shaft of a spindle is provided with an outer sleeve having a tapered outer surface so as to achieve, in positions distant from the shaft center, close contacts in two places, i.e., between the tapered outer surface of the outer sleeve and a tapered inner surface of each of the holders and between an abutting surface of the shaft and an abutted surface of each of the holders.

### ADVANTAGEOUS EFFECTS OF INVENTION

By combining an invention related to the spindle or the main-spindle including the double gripping mechanism with an invention related to the holders each including the double grasped part, it has become possible to attach many types of attachments such as a chuck and the like to mutually the same main-spindle.

As a result, because it is possible to perform processing on a workpiece while sequentially having many types of tools grasped by the main-spindle, it is possible to perform many types of machining processes such as lathe-turning, milling, and grinding by using a single machine tool. Further, by performing processing while grasping a workpiece with a chuck or a clamp mechanism attached to the main-spindle, it is possible to perform many steps of machining processes by using the single machine tool.

Close contacts are achieved in two places, i.e., between the tapered inner surface of the inner sleeve attached to the shaft of the spindle and the tapered outer surface of each of the holders; and between the abutting surface of the shaft and the abutted surface of each of the holders. Consequently, it is possible to achieve a joining strength that can withstand a heavy cutting process.

Further, close contacts are achieved in two places that are in positions distant from the shaft center, i.e., between the tapered outer surface of the outer sleeve attached to the shaft and the tapered inner surface of each of the holders; and between the abutting surface of the shaft and the abutted surface of each of the holders. Consequently, it is possible to achieve a joining strength that can withstand a super-heavy cutting process.

Because the sleeve is attached to the shaft of the spindle and because there is no need to attach a sleeve to each of the holders, the configurations of the holders have thus been simplified. Further, when damaged, only the sleeve needs to be replaced. Thus, there is no need to replace the shaft of the spindle.
Further, it is possible to provide and utilize the holder holding mechanism and the holder holding device, each including the double grasping mechanism and/or the joining structure realized by the planar contacts in the two places.

### BRIEF DESCRIPTION OF DRAWINGS

FIG. 1 is a cross-sectional view of a main-spindle.
FIG. 2 is a partial cross-sectional view of a front part of a spindle.
FIG. 3 is a partial cross-sectional view of a rear part of the main-spindle.
FIG. 4 is a partial cross-sectional view of an inner draw bar and an outer draw bar.
FIG. 5 is a partial cross-sectional view of another inner draw bar and the outer draw bar.
FIG. 6 is a partial cross-sectional view of a tool holder and the spindle.

FIG. 7 is a partial cross-sectional view of another tool holder and the spindle.
FIG. 8 is a partial cross-sectional view of yet another tool holder and the spindle.
FIG. 9 is a partial cross-sectional view of a chuck holder and the spindle.
FIG. 10 is a partial cross-sectional view of another chuck holder and the spindle.
FIG. 11 is a partial cross-sectional view of yet another chuck holder and the spindle.
FIG. 12 is a partial cross-sectional view of yet another chuck holder and the spindle.

FIG. 13 is a partial cross-sectional view of a clamp holder and the spindle.
FIG. 14 is a partial cross-sectional view of another clamp holder and the spindle.
FIG. 15 is a partial cross-sectional view of a double grasping mechanism.
FIG. 16 is a partial cross-sectional view of an inner draw bar and an outer draw bar.
FIG. 17 is a partial cross-sectional view of a rear part of another main-spindle.
FIG. 18 is a partial cross-sectional view of a set made up of main-spindle.

FIG. 19 is a partial cross-sectional view of another set made up of main-spindles.
FIG. 20 is a partial cross-sectional view of a set made up of main-spindles and a swinging mechanism.
FIG. 21 is a front view of a machining center.
FIG. 22 is a side view of the machining center.
FIG. 23 is a cross-sectional view at line J-J shown in FIG. 22.

### DESCRIPTION OF EMBODIMENTS

A double grasped part is formed by an outer grasped part and an inner grasped part, while a double gripping mechanism is formed by an outer gripping mechanism including outer balls and an outer draw bar and an inner gripping mechanism including inner balls and an inner draw bar, and further, a double grasping mechanism is formed by an outer grasping mechanism including the outer grasped part and the outer gripping mechanism and an inner grasping mechanism including the inner grasped part and the inner gripping mechanism. The inner gripping mechanism is configured so as to grasp the inner grasped part within the outer draw bar.

Further, a portion of the outer draw bar near an end thereof on the front side is formed as a circular cylindrical part that has a plurality of ball holes therein so that the outer balls are provided while being held so as to be movable in a normal line direction, whereas a portion of the inner draw bar near an end thereof on the front side is formed as a circular cylindrical part that has a plurality of ball holes therein so that the inner balls are provided while being held so as to be movable in a normal line direction.

Further, while the outer gripping mechanism and the inner gripping mechanism are each in an open state, the outer grasped part is inserted into the outer gripping mechanism, whereas the inner grasped part is inserted into the inner gripping mechanism, and upon moving the outer draw bar toward the rear side, the outer balls move toward the outer grasped part so as to achieve a grasped state in which the outer grasped part is grasped by the outer gripping mechanism, and further, upon moving the inner draw bar toward the rear side, the inner balls move toward the inner grasped part so as to achieve a grasped state in which the inner grasped part is grasped by the inner gripping mechanism.

The outer gripping mechanism may have a configuration in which the outer grasped part is configured with an outer pull stud including an outer head and an outer neck, and upon inserting the outer pull stud into the outer draw bar and moving the outer draw bar, the outer balls move by being pushed inwardly, so that the outer balls that have moved inwardly grip the outer head.

The outer gripping mechanism may have another configuration in which the outer grasped part is forked as a substantially circular cylindrical part having a grasped groove formed on an inner surface thereof, and upon inserting the substantially circular cylindrical part into an outer circumference of the outer draw bar and moving the outer draw bar, the outer balls move by being pushed outwardly, so that the outer balls that have moved outwardly grip the grasped groove.

It is desirable to configure the inner gripping mechanism in such a manner that the inner grasped part is configured with an inner pull stud including an inner head and an inner neck, so that upon inserting the inner pull stud into the inner draw bar and moving the inner draw bar, the inner balls move by being pushed inwardly, so that the inner balls that have moved inwardly grip the inner head.

In a double grasping mechanism, the outer grasped part is configured with an outer pull stud including an outer head and an outer neck, whereas the inner grasped part is configured with an inner pull stud including an inner head and an inner neck. The outer gripping mechanism includes an outer large-diameter part, an outer small-diameter part, the outer draw bar, and the outer balls, whereas the inner gripping mechanism includes an inner large-diameter part and an inner small-diameter part provided in the outer draw bar, the inner draw bar, and the inner balls.

When the outer balls are positioned inside the outer large-diameter part so that the outer gripping mechanism is in the open state, upon inserting the outer pull stud into the outer gripping mechanism, the outer head pushes the outer balls outwardly in the normal line direction, so that the outer head enlarges a gap between the outer balls so as to go through the gap and go into an outer head space. Subsequently, when the outer draw bar is moved rearward, the outer balls move so as to be positioned inside the outer small-diameter part, so that the outer balls move inwardly in the normal line direction so as to grip the outer head and so as to achieve the grasped state in which the outer pull stud is grasped by the outer gripping mechanism.

When the inner balls are positioned inside the inner large-diameter part, so that the inner gripping mechanism is in the open state, upon inserting the inner pull stud into the inner gripping mechanism, the inner head pushes the inner balls outwardly in the normal line direction, so that the inner head enlarges a gap between the inner balls so as to go through the gap and go into an inner head space. Subsequently, when the inner draw bar is moved rearward, the inner balls move so as to be positioned inside the inner small-diameter part, so that the inner balls move inwardly in the normal line direction so as to grip the inner head and so as to achieve the grasped state in which the inner pull stud is grasped by the inner gripping mechanism.

In the configuration described above, it is desirable to provide a chamfered part at the tip end of each of the outer and the inner heads so that the outer balls and the inner balls move smoothly. Further, it is desirable to provide a sloped part in the area between the outer head and the outer neck and in the area between the inner head and the inner neck, so that the sloped parts are pushed rearward by the outer balls and the inner balls. Also, it is desirable to provide a sloped surface in the area between the outer large-dimeter part and the outer small-diameter part and in the area between the inner large-diameter part and the inner small-diameter part, so that the outer balls and the inner balls move smoothly.

Further, a double draw bar structure is formed by an outer draw bar and an inner draw bar. A portion of the outer draw bar near an end thereof on the front side is formed as a circular cylindrical part, while the circular cylindrical part has a plurality of ball holes therein so that outer balls are provided therein, respectively. An outer head space is provided on the rear side of the plurality of ball holes, while an inner large-diameter part is provided on the rear side of the outer head space, and further, an inner small-diameter part is provided on the rear side of the inner large-diameter part.

Further, a portion of the inner draw bar near an end thereof on the front side is formed as a circular cylindrical part, while the circular cylindrical part has a plurality of ball holes therein so that inner balls are provided therein, respectively. An inner head space is provided on the rear side of the plurality of ball holes, and upon inserting the inner draw bar into the outer draw bar, the ball holes provided in the inner draw bar are configured so as to be movable from the inside of the inner large-diameter part to the inside of the inner small-diameter part.

Each of the ball holes provided in the outer and the inner draw bars is formed as a hole having a surface of a circular truncated cone of which the axial line is on the normal line of the outer draw bar or the inner draw bar and of which the dimension slightly increases toward the exterior, so that the outer balls and the inner balls do not fall inside the circular cylindrical part. Further, it is desirable to configure the inner ball holes so as to be oblong, because there is no need to move the inner draw bar in synchronization with the outer draw bar when the outer draw bar is moved, and it is therefore possible to move the outer draw bar by itself.

In a double grasping mechanism, the outer grasped part is formed as a substantially circular cylindrical part having a grasped groove formed on an inner surface thereof, while a rear sloped surface is provided on the rear side of the grasped groove, whereas the inner grasped part is configured with an inner pull stud including an inner head and an inner neck.
The outer gripping mechanism is configured so as to include: a fixed guide having a plurality of guide holes therein; and the outer draw bar and the outer balls provided inside the fixed guide, while each of the outer balls is disposed so as to be stored in both one of the ball holes provided in the outer draw bar and one of the guide holes at the same time.

In the outer draw bar, a front sloped surface is provided on the front and outer side of the ball holes, while an inner large-diameter part is provided on the rear and inner side of the ball holes, and further, an inner small-diameter part is provided on the rear side of the inner large-diameter part.
A state in which the ball holes provided in the outer draw bar substantially match the guide holes is defined as an open state, and when the substantially circular cylindrical part is inserted in an outer circumference of the fixed guide while being in the open state, each of the outer balls is stored in both one of the ball holes and one of the guide holes so as not to prevent the substantially circular cylindrical part from being inserted. The grasped groove is configured so as to be positioned closer to the front side than the guide holes are, after the insertion of the substantially circular cylindrical part.

Subsequently, when the outer draw bar is moved rearward, the outer balls move outwardly in the normal line direction by being pushed by the front sloped surface of the outer draw bar, so that the outer balls push the rear sloped surface of the grasped groove rearward and so that the substantially circular cylindrical part is pulled in by being pushed by the outer balls. The outer balls pushed by the front sloped surface grip the rear sloped surface while pushing the rear sloped surface, so as to achieve the grasped state in which the substantially circular cylindrical part is grasped by the outer gripping mechanism.

The inner gripping mechanism is configured so as to include: the inner large-diameter part, the inner small-diameter part, the inner draw bar, and the inner balls. When the inner balls are positioned inside the inner large-diameter part, so that the inner gripping mechanism is in the open state, upon inserting the inner pull stud into the inner gripping mechanism, the inner head pushes the inner balls outwardly in the normal line direction, so that the inner head enlarges a gap between the inner balls so as to go through the gap and go into an inner head space. Subsequently, when the inner draw bar is moved rearward, the inner balls move so as to be positioned inside the inner small-diameter part, so that the inner balls move inwardly in the normal line direction so as to grip the inner head and so as to achieve the grasped state in which the inner draw bar is grasped by the inner gripping mechanism.

In this situation, a double draw bar structure is formed by the outer draw bar and the inner draw bar. A portion of the outer draw bar near an end thereof on the front side is formed as a circular cylindrical part, while the circular cylindrical part has a plurality of ball holes therein, so that outer balls are provided therein, respectively. Further, it is desirable to provide a sloped surface between the inner large-diameter part and the inner small-diameter part, so that the inner balls move smoothly.

As long as the front sloped surface has the function of pushing the outer balls outwardly, there is no limitation to the shape thereof; however, it is desirable to configure the front sloped surface so as to be a part of a spherical surface or a surface including such a spherical surface, the spherical surface belonging to a sphere having the center thereof positioned closer to the front side than the centers of the ball holes are, and closer to the outside than the outer surface of the outer draw bar is, while the diameter of the sphere is slightly larger than those of the outer balls. Further, it is desirable to configure the front sloped surface so as to be a part of a spherical surface or a surface including such a spherical surface, the spherical surface belonging to a sphere circumscribed by the outer balls while the substantially circular cylindrical part is grasped by the outer gripping mechanism.

Further, a portion of the inner draw bar near an end thereof on the front side is formed as a circular cylindrical part, while the circular cylindrical part has a plurality of ball holes therein, so that inner balls are provided therein, respectively. Further, upon inserting the inner draw bar into the outer draw bar, the ball holes provided in the inner draw bar are configured so as to be movable from the inside of the inner large-diameter part to the inside of the inner small-diameter part. Each of the ball holes provided in the outer and the inner balls is formed as a hole having a surface of a circular truncated cone of which the axial line is on the normal line of the outer draw bar or the inner draw bar and of which the dimension slightly increases toward the exterior, so that the outer balls and the inner balls do not fall inside the circular cylindrical part.

A spindle includes: a spindle case, a bearing attached to the spindle case, a shaft rotatably held by the bearing, and an outer draw bar and an inner draw bar inserted in a bore in the shaft. The bore in the shaft is provided with an outer large-diameter part and an outer small-diameter part. In this situation, it is desirable to provide a sloped surface between the outer large-diameter part and the outer small-diameter part, so that the outer balls move smoothly.

Further, a portion of the outer draw bar near an end thereof on the front side is formed as a circular cylindrical part, while the circular cylindrical part has a plurality of ball holes therein, so that outer balls are provided therein respectively, while being held so as to be movable in a normal line direction. An outer head space is provided on the rear side of the outer balls, while an inner large-diameter part is provided on the rear side of the outer head space, whereas an inner small-diameter part is provided on the rear side of the inner large-diameter part.

Further, a portion of the inner draw bar near an end thereof on the front side is formed as a circular cylindrical part, while the circular cylindrical part has a plurality of ball holes therein, so that inner balls are provided therein respectively, while being held so as to be movable in a normal line direction. An inner head space is provided on the rear side of the inner balls, whereas the inner draw bar is inserted into the outer draw bar. Further, the spindle includes a double gripping mechanism formed by an outer gripping mechanism and an inner gripping mechanism, the outer gripping mechanism including the outer large-diameter part, the outer small-diameter part, the outer draw bar, and the outer balls, and the inner gripping mechanism including the inner large-diameter part, the inner small-diameter part, the inner draw bar, and the inner balls.

Further, a main-spindle includes: the spindle; a main-spindle tube to which the spindle is attached; a motor that drives and rotates the shaft of the spindle; and a double push-pull mechanism including an outer push-pull mechanism and an inner push-pull mechanism that respectively push and pull the outer draw bar and the inner draw bar in the spindle.

Further, when the outer draw bar is pushed to the front side by the outer push-pull mechanism, the outer balls provided in the outer draw bar are positioned inside the outer large-diameter part of the shaft of the spindle, so that the outer gripping mechanism is in an open state, whereas when the outer draw bar is pulled to the rear side by the outer push-pull mechanism, the outer balls are positioned inside the outer small-diameter part of the shaft of the spindle so that the outer gripping mechanism is in a grasped state.

Further, in the main-spindle, when the inner draw bar is pushed to the front side by the inner push-pull mechanism while the outer gripping mechanism is in an open state, the inner balls provided in the inner draw bar are positioned inside the inner large-diameter part of the outer draw bar, so that the inner gripping mechanism is in an open state, whereas when the inner draw bar is pulled to the rear side by the inner push-pull mechanism while the outer gripping mechanism is in a grasped state, the inner balls are positioned inside the inner small-diameter part of the outer draw bar, so that the inner gripping mechanism is in a grasped state.

A spindle includes: a spindle case, a bearing attached to the spindle case, a shaft rotatably held by the bearing, and an outer draw bar and an inner draw bar inserted in a bore in the shaft. A fixed guide having a plurality of guide holes therein are provided in the bore in the shaft on the front side.

Further, a portion of the outer draw bar near an end thereof on the front side is formed as a circular cylindrical part, while the circular cylindrical part has a plurality of ball holes therein, so that outer balls are provided therein, respectively. Each of the outer balls is disposed so as to be stored in both one of the ball holes provided in the outer draw bar and one of the guide holes at the same time, and the outer balls are held so as to be movable in a normal line direction. In the outer draw bar, a front sloped surface is provided on the front and outer side of the ball holes, while an inner large-diameter part is provided on the rear and inner side of the ball holes, and further, an inner small-diameter part is provided on the rear side of the inner large-diameter part.

Further, a portion of the inner draw bar near an end thereof on the front side is formed as a circular cylindrical part, while the circular cylindrical part has a plurality of ball holes therein, so that inner balls are provided therein respectively, while being held so as to be movable in a normal line direction. An inner head space is provided on the rear side of the inner balls, whereas the inner draw bar is inserted into the outer draw bar.
Further, the spindle includes a double gripping mechanism formed by an outer gripping mechanism and an inner gripping mechanism, the outer gripping mechanism including the fixed guide, the outer draw bar, and the outer balls, and the inner gripping mechanism including the inner large-diameter part, the inner small-diameter part, the inner draw bar, and the inner balls.

Further, a main-spindle includes: the spindle; a main-spindle tube to which the spindle is attached; a motor that drives and rotates the shaft of the spindle; and a double push-pull mechanism including an outer push-pull mechanism and an inner push-pull mechanism that respectively push and pull the outer draw bar and the inner draw bar in the spindle.

When the outer draw bar is pushed to the front side by the outer push-pull mechanism, the ball holes provided in the outer draw bar substantially match the guide holes provided in the fixed guide, so that each of the outer balls is stored in both one of the ball holes provided in the outer draw bar and one of the guide holes at the same time, and thus the outer grip mechanism is in an open state. Further, when the outer draw bar is pulled to the rear side by the outer push-pull mechanism, the outer balls move outwardly in the normal line direction by being pushed by the front sloped surface of the outer draw bar, so that the outer grip mechanism is in a grasped state.

Further, in the main-spindle, when the inner draw bar is pushed to the front side by the inner push-pull mechanism while the outer grip mechanism is in an open state, the inner balls provided in the inner draw bar are positioned inside the inner large-diameter part of the outer draw bar, so that the inner grip mechanism is in an open state, whereas when the inner draw bar is pulled to the rear side by the inner push-pull mechanism while the outer grip mechanism is in a grasped state, the inner balls are positioned inside the inner small-diameter part of the outer draw bar, so that the inner grip mechanism is in a grasped state.

In any of the spindles and the main-spindles described above, it is desirable to form a portion of the shaft near an end thereof on the front side as a tapered bore, because it is possible to realize a joining structure having a high degree of centripetality.
Further, it is desirable to attach an inner sleeve having a tapered inner surface to a position near an end on the front side of the bore in the shaft and to further attach a spring to the rear side of the inner sleeve, so that a vicinity of an end of the shaft is formed as a tapered bore by the tapered inner surface of the inner sleeve. In this configuration, a joining structure is realized by planar contacts in two places, i.e., between the tapered inner surface of the inner sleeve and the tapered outer surface of each of the holders, and between the abutting surface of the shaft and the abutted surface of each of the holders. Consequently, it is possible to realize a joining structure that can withstand a heavy cutting process.

Further, it is desirable to provide a tapered outer surface on the outer circumference at the tip end of the shaft. In this configuration, it is possible to realize a joining structure that has an even higher degree of centripetality in the positions distant from the shaft center. It is also desirable to attach an outer sleeve having a tapered outer surface to a position near an end on the front side of the shaft and to further attach a spring to the rear side of the outer sleeve. In this configuration, a joining structure is realized by planar contacts in two places, i.e., between the tapered outer surface of the outer sleeve and the tapered inner surface of each of the holders, and between the abutting surface of the shaft and the abutted surface of each of the holders. Consequently, it is possible to realize a joining structure that can withstand a super-heavy cutting process.
The configurations described in paragraphs [0058] and [0059] above may be applied to other spindles and other main-spindles that include no double gripping mechanism.

A holder holding mechanism includes: a holding base; and an outer draw bar and an inner draw bar inserted in a bore in the holding base. The holder holding mechanism is different from the spindles because the holding base does not rotate. The holder holding mechanism is configured so that the bore in the holding base is provided with an outer large-diameter and an outer small-diameter part.

Further, a portion of the outer draw bar near an end thereof on the front side is formed as a circular cylindrical part, while the circular cylindrical part has a plurality of ball holes therein, so that outer balls are provided therein respectively, while being held so as to be movable in a normal line direction. An outer head space is provided on the rear side of the outer balls, while an inner large-diameter part is provided on the rear side of the outer head space, whereas an inner small-diameter part is provided on the rear side of the inner large-diameter part.

Further, a portion of the inner draw bar near an end thereof on the front side is formed as a circular cylindrical part, while the circular cylindrical part has a plurality of ball holes therein, so that inner balls are provided therein respectively, while being held so as to be movable in a normal line direction. An inner head space is provided on the rear side of the inner balls, whereas the inner draw bar is inserted into the outer draw bar. The holder holding mechanism includes a double gripping mechanism formed by an outer gripping mechanism and an inner gripping mechanism, the outer gripping mechanism including the outer large-diameter part, the outer small-diameter part, the outer draw bar, and the outer balls, and the inner gripping mechanism including the inner large-diameter part, the inner small-diameter part, the inner draw bar, and the inner balls.

Further, a holder holding device includes the holder holding mechanism and a double push-pull mechanism including an outer push-pull mechanism and an inner push-pull mechanism that respectively push and pull the outer draw bar and the inner draw bar in the holder holding mechanism. The holder holding device is different from the main-spindle because each of the holders is grasped in a non-rotating state.

When the outer draw bar is pushed to the front side by the outer push-pull mechanism, the outer balls provided in the outer draw bar are positioned inside the outer large-diameter part of the holding base, so that the outer grip mechanism is in an open state, whereas when the outer draw bar is pulled to the rear side by the outer push-pull mechanism, the outer balls are positioned inside the outer small-diameter part of the holding base so that the outer grip mechanism is in a grasped state.

Further, in the holder holding device, when the inner draw bar is pushed to the front side by the inner push-pull mechanism while the outer grip mechanism is in an open state, the inner balls provided in the inner draw bar are positioned inside the inner large-diameter part of the outer draw bar, so that the inner grip mechanism is in an open state, whereas when the inner draw bar is pulled to the rear side by the inner push-pull mechanism while the outer grip mechanism is in a grasped state, the inner balls are positioned inside the inner small-diameter part of the outer draw bar, so that the inner grip mechanism is in a grasped state.

A holder holding mechanism includes: a holding base; and an outer draw bar and an inner draw bar inserted in a bore in the holding base. A fixed guide having a plurality of guide holes therein are provided in the bore in the holding base on the front side.

Further, a portion of the outer draw bar near an end thereof on the front side is formed as a circular cylindrical part, while the circular cylindrical part has a plurality of ball holes therein, so that outer balls are provided therein, respectively. Each of the outer balls is disposed so as to be stored in both one of the ball holes provided in the outer draw bar and one of the guide holes at the same time, and the outer balls are held so as to be movable in a normal line direction. Further, in the outer draw bar, a front sloped surface is provided on the front and outer side of the ball holes, while an inner large-diameter part is provided on the rear and inner side of the ball holes, and further, an inner small-diameter part is provided on the rear side of the inner large-diameter part.

Further, a portion of the inner draw bar near an end thereof on the front side is formed as a circular cylindrical part, while the circular cylindrical part has a plurality of ball holes therein, so that inner balls are provided while being held so as to be movable in a normal line direction. An inner head space is provided on the rear side of the inner balls, whereas the inner draw bar is inserted into the outer draw bar.

Further, the holder holding mechanism includes a double gripping mechanism formed by an outer grip mechanism and an inner grip mechanism, the outer grip mechanism including the fixed guide, the outer draw bar, and the outer balls, and the inner grip mechanism including the inner large-diameter part, the inner small-diameter part, the inner draw bar, and the inner balls.
Further, a holder holding device includes: the holder holding mechanism; and a double push-pull mechanism including an outer push-pull mechanism and an inner push-pull mechanism that respectively push and pull the outer draw bar and the inner draw bar in the holder holding mechanism.

Further, when the outer draw bar is pushed to the front side by the outer push-pull mechanism, the ball holes provided in the outer draw bar substantially match the guide holes provided in the fixed guide, so that the outer grip mechanism is in an open state, whereas when the outer draw bar is pulled to the rear side by the outer push-pull mechanism, the outer balls move outwardly in the normal line direction by being pushed by the front sloped surface of the outer draw bar, so that the outer grip mechanism is in a grasped state.

Further, in the holder holding device, when the inner draw bar is pushed to the front side by the inner push-pull mechanism while the outer grip mechanism is in an open state, the inner balls provided in the inner draw bar are positioned inside the inner large-diameter part of the outer draw bar, so that the inner grip mechanism is in an open state, whereas when the inner draw bar is pulled to the rear side by the inner push-pull mechanism while the outer grip mechanism is in a grasped state, the inner balls are positioned inside the inner small-diameter part of the outer draw bar, so that the inner grip mechanism is in a grasped state.

In any of the holder holding mechanisms and the holder holding devices described above, it is desirable to form a portion of the holding base near an end thereof on the front side as a tapered bore, because it is possible to realize a joining structure having a high degree of centripetality.
Further, it is desirable to attach an inner sleeve having a tapered inner surface to a position near an end on the front side of the bore in the holding base and to further attach a spring to the rear side of the inner sleeve, so that a vicinity of an end of the holding base is formed as a tapered bore by the tapered inner surface of the inner sleeve. In this configuration, a joining structure is realized by planar contacts in two places, i.e., between the tapered inner surface of the inner sleeve and the tapered outer surface of each of the holders, and between the abutting surface of the holding base and the abutted surface of each of the holders. Consequently, it is possible to realize a joining structure that can withstand a heavy cutting process.

Further, it is desirable to provide a tapered outer surface on the outer circumference at the tip end of the holding base. In this configuration, it is possible to realize a joining structure that has an even higher degree of centripetality in the positions distant from the center. It is also desirable to attach an outer sleeve having a tapered outer surface to a position near an end on the front side of the holding base and to further attach a spring to the rear side of the outer sleeve. In this configuration, a joining structure is realized by planar contacts in two places, i.e., between the tapered outer surface of the outer sleeve and the tapered inner surface of each of the holders, and between the abutting surface of the holding base and the abutted surface of each of the holders. Consequently, it is possible to realize a joining structure that can withstand a super-heavy cutting process.
The configurations described in paragraphs [0072] and [0073] above may be applied to other holder holding mechanisms and other holder holding devices that include no double gripping mechanism.

In any of the main-spindles and the holder holding devices described above, the double push-pull mechanism may be configured so that the outer push-pull mechanism is an outer cylinder, whereas the inner push-pull mechanism is an inner cylinder, or so that the outer push-pull mechanism is an outer electric cylinder, whereas the inner push-pull mechanism is an inner electric cylinder.

In the case where the double push-pull mechanism is configured so that the outer push-pull mechanism is an outer cylinder, whereas the inner push-pull mechanism is an inner cylinder, the outer cylinder includes an outer piston and an outer rod, so that the outer rod is connected to the outer draw bar so as to push and pull the outer draw bar, whereas the inner cylinder includes an inner piston and an inner rod, so that the inner rod is connected to the inner draw bar so as to push and pull the inner draw bar.

The cylinder may be hydraulic or pneumatic. For attachment to a main-spindle, it is desirable to configure the double push-pull mechanism so as to rotate together with the outer draw bar and the inner draw bar, in conjunction with the rotation of the shaft of the spindle.

In the case where the double push-pull mechanism is configured so that the outer push-pull mechanism is an outer electric cylinder, whereas the inner push-pull mechanism is an inner electric cylinder, the outer electric cylinder is configured so as to include: an outer push-pull nut rotatably attached to a push-pull base via a bearing; and an outer ball screw attached to the outer draw bar via a bearing and a spring. The outer ball screw is caused to slide when an outer motor drives and rotates the outer push-pull nut, so that the outer draw bar is pushed and pulled by the outer ball screw.

Further, the inner electric cylinder is configured so as to include: an inner push-pull nut rotatably attached to a push-pull base via a bearing; and an inner ball screw attached to the inner draw bar via a bearing and a spring. The inner ball screw is caused to slide when an inner motor drives and rotates the inner push-pull nut, so that the inner draw bar is pushed and pulled by the inner ball screw.

For attachment to a main-spindle, it is desirable to attach the push-pull base to the shaft of the spindle or to a shaft that rotates together with the shaft of the spindle, for a reason related to the strength and for the purpose of maintaining the balance. In that situation, it is desirable to attach the push-pull base to the shaft of the spindle or to a shaft that rotates together with the shaft of the spindle via a bearing, and to further provide a stopper that prevents the push-pull base from rotating.

The outer ball screw and the inner ball screw are each a hollow ball screw. The outer ball screw has the outer draw bar penetrating therethrough, whereas the inner ball screw has the inner draw bar penetrating therethrough. That is because it is desirable to support the outer ball screw and the inner ball screw from both sides by providing a bearing on both sides of the outer draw bar and the inner draw bar.

The double push-pull mechanism in which the outer push-pull mechanism is configured with an outer electric cylinder whereas the inner push-pull mechanism is configured with an inner electric cylinder may be used, not only with a double draw bar structure, but also for pushing and pulling a double pushed-pulled member that requires pushing and pulling and that includes an outer pushed-pulled member and an inner pushed-pulled member.

A tool holder includes: a holder base for holding a tool; and an outer grasped part. For attachment to the spindle or the main-spindle described in paragraphs [0046] to [0051] (up to the line just before paragraph [0052]) or to the holder holding mechanism or the holder holding device described in paragraphs [0060] to [0065] (up to the line just before paragraph [0066]), the tool holder is configured so that the outer grasped part is configured with an outer pull stud including an outer head and an outer neck, and the outer pull stud has a hole through which an inner pull stud serving as an inner grasped part can penetrate.

For attachment to the spindle or the main-spindle described in paragraphs [0052] to [0057] (up to the line just before paragraph [0058]) or to the holder holding mechanism or the holder holding device described in paragraphs [0066] to [0071] (up to the line just before paragraph [0072]), the tool holder is configured so that the outer grasped part is formed as a substantially circular cylindrical part that has a grasped groove formed on an inner surface thereof, and a rear sloped surface is provided on the rear side of the grasped groove.

Although there is no need to attach an inner grasped part to the tool holder, in order to make it possible to share the component parts with a chuck holder and/or a clamp holder and to make the tool holder attachable to the same main-spindle or the same holder holding device, the tool holder is configured so as to allow the penetration of the inner pull stud.

Further, it is desirable to have a configuration in which the holder base has a tapered outer surface and further has an abutted surface on the front side of the tapered outer surface. That is because, when the joining structure is realized by planar contacts in two places, i.e., between the tapered inner surface of the attachment destination and the tapered outer surface of the tool holder; and between the abutting surface of the attachment destination and the abutted surface of the tool holder, it is possible to obtain a joining structure that can withstand a heavy cutting process.

Further, it is desirable to have a configuration in which the holder base has a tapered inner surface and further has an abutted surface on the rear side of the tapered inner surface. That is because, when the joining structure is realized by planar contacts in two places, i.e., between the tapered outer surface of the attachment destination and the tapered inner surface of the tool holder; and between the abutting surface of the attachment destination and the abutted surface of the tool holder, it is possible to obtain a joining structure that can withstand a super-heavy cutting process.

A chuck holder includes a holder base for holding a chuck. For attachment to the spindle or the main-spindle described in paragraphs [0046] to [0051] (up to the line just before paragraph [0052]) or to the holder holding mechanism or the holder holding device described in paragraphs [0060] to [0065] (up to the line just before paragraph [0066]), the outer grasped part is configured with an outer pull stud including an outer head and an outer neck, whereas the inner grasped part is configured with an inner pull stud including an inner head and an inner neck. The inner pull stud penetrates through holes provided in the outer pull stud and in the holder base so that the inner pull stud is attached while being slidable in the axial direction. The inner pull stud is configured so as to be connectable to a jaw slide of the chuck.

For attachment to the spindle or the main-spindle described in paragraphs [0052] to [0057] (up to the line just before paragraph [0058]) or to the holder holding mechanism or the holder holding device described in paragraphs [0066] to [0071] (up to the line just before paragraph [0072]), the outer grasped part is formed as a substantially circular cylindrical part that has a grasped groove formed on an inner surface thereof, while a rear sloped surface is provided on the rear side of the grasped groove, and the inner grasped part is configured with an inner pull stud including an inner head and an inner neck. The inner pull stud penetrates through a hole provided in the holder base so that the inner pull stud is attached while being slidable in the axial direction. The inner pull stud is configured so as to be connectable to a jaw slide of the chuck.

Further, it is desirable to have a configuration in which the holder base has a tapered outer surface and further has an abutted surface on the front side of the tapered outer surface. That is because, when the joining structure is realized by planar contacts in two places, i.e., between the tapered inner surface of the attachment destination and the tapered outer surface of the chuck holder; and between the abutting surface of the attachment destination and the abutted surface of the chuck holder, it is possible to obtain a joining structure that can withstand a heavy cutting process.

Further, it is desirable to have a configuration in which the holder base has a tapered inner surface and further has an abutted surface on the rear side of the tapered inner surface. That is because, when the joining structure is realized by planar contacts in two places, i.e., between the tapered outer surface of the attachment destination and the tapered inner surface of the chuck holder; and between the abutting surface of the attachment destination and the abutted surface of the chuck holder, it is possible to obtain a joining structure that can withstand a super-heavy cutting process.

A clamp holder includes a holder base for holding a clamp mechanism. For attachment to the spindle or the main-spindle described in paragraphs [0046] to [0051] (up to the line just before paragraph [0052]) or to the holder holding mechanism or the holder holding device described in paragraphs [0060] to [0065] (up to the line just before paragraph [0066]), the outer grasped part is configured with an outer pull stud including an outer head and an outer neck, whereas the inner grasped part is configured with an inner pull stud including an inner head and an inner neck. The inner pull stud penetrates through holes provided in the outer pull stud and in the holder base so that the inner pull stud is attached while being slidable in the axial direction. The inner pull stud is configured so as to be connectable to a slide of the clamp mechanism.

For attachment to the spindle or the main-spindle described in paragraphs [0052] to [0057] (up to the line just before paragraph [0058]) or to the holder holding mechanism or the holder holding device described in paragraphs [0066] to [0071] (up to the line just before paragraph [0072]), the outer grasped part is formed as a substantially circular cylindrical part that has a grasped groove formed on an inner surface thereof, while a rear sloped surface is provided on the rear side of the grasped groove, and the inner grasped part is configured with an inner pull stud including an inner head and an inner neck. The inner pull stud penetrates through holes provided in the substantially circular cylindrical part and in the holder base so that the inner pull stud is attached while being slidable in the axial direction. The inner pull stud is configured so as to be connectable to a slide of the clamp mechanism.

Further, it is desirable to configure the clamp mechanism so as to include: a clamp base; a slide that moves in a front-and-back direction in conjunction with a front-and-back-direction movement of the inner pull stud; a reversing frame that reverses in conjunction with the movement of the slide; a moving block that moves in a front-and-back direction in conjunction with the reversing of the reversing frame; and a clamp arm that reverses in conjunction with the movement of the moving block.

Further, the clamp mechanism may be configured so that, when the inner pull stud included in the clamp holder is moved rearward, a clamp surface of the clamp arm presses a workpiece against the clamp surface. Further, it is desirable to have a configuration in which the holder base has a tapered outer surface and further has an abutted surface on the front side of the tapered outer surface.

That is because, when the joining structure is realized by planar contacts in two places, i.e., between the tapered inner surface of the attachment destination and the tapered outer surface of the clamp holder; and between the abutting surface of the attachment destination and the abutted surface of the clamp holder, it is possible to obtain a joining structure that can withstand a heavy cutting process.

Further, it is desirable to have a configuration in which the holder base has a tapered inner surface and further has an abutted surface on the rear side of the tapered inner surface. That is because, when the joining structure is realized by planar contacts in two places, i.e., between the tapered outer surface of the attachment destination and the tapered inner surface of the clamp holder; and between the abutting surface of the attachment destination and the abutted surface of the clamp holder, it is possible to obtain a joining structure that can withstand a super-heavy cutting process.

A CNC machine tool includes: any of the main-spindles described above; a Z-axis moving mechanism that moves the main-spindle in a Z-axis direction, which is an axial direction of the main-spindle; and one or both of an X-axis moving mechanism and a Y-axis moving mechanism, the X-axis moving mechanism being configured so as to move the main-spindle in an X-axis direction, which is a direction perpendicular to the Z-axis, and the Y-axis moving mechanism being configured so as to move the main-spindle in a Y-axis direction, which is a direction perpendicular to the Z-axis and the X-axis, and the CNC machine tool exercises numerical control over the movements of the Z-axis moving mechanism, the X-axis moving mechanism, and the Y-axis moving mechanism.

By using the CNC machine tool described above, it is possible to perform processing on a workpiece held in a processing space represented by the range in which a tool attached to the main-spindle can move, while applying a forwarding movement and a cutting movement to the tool held by the main-spindle. Further, it is possible to perform many types of processing automatically by switching from one tool to another selected from among many types of tools.

Further, by placing a tool, a turret holding a plurality of tools, a holder holding device holding a tool holder, or the like into a processing space represented by the range in which the workpiece grasped by a chuck or a clamp mechanism attached to the main-spindle can move, it is possible to perform processing with the tool or the rotating tool fixed within the processing space, while applying a forwarding movement and a cutting movement to the workpiece grasped by the main-spindle.

As a result, it is possible to perform many steps of processing, which have conventionally been performed by a plurality of machine tools, by using a single machine tool. Further, because it is possible to attach a clamp mechanism that is suitable for the shape of a workpiece, it is possible to perform many steps of processing without being restricted by the shapes of workpieces.

Further, while any of the main-spindles described above is used as a first main -spindle, the first main-spindle is provided so as to be movable along three axes of an X-axis, a Y-axis, and a Z-axis, and numerical control is exercised over movements along the three axes. Further, while any of the main-spindles described above is used as a second main-spindle and as a third main-spindle, a set made up of the second main-spindle and the third main-spindle, or a set made up of the second main-spindle and any of the holder holding devices described above is provided.

In that situation, the second main-spindle and the third main-spindle in the set or the second main-spindle and the holder holding device in the set share the same shaft center, and one of the second and the third main-spindles or one of the second main-spindle and the holder holding device is movable in the direction of the shaft center.

Further, it is desirable to have a configuration in which both of the second and the third main-spindles or both of the second main-spindle and the holder holding device are movable in the direction of the shaft center, because it is possible to additionally enlarge the processing range by the moving amounts of the second main-spindle and the third main-spindle or the holder holding device, in addition to the moving strokes of the first main-spindle. Further, a CNC machine tool includes the set made up of the main-spindles described above or the set made up of the main-spindles and the holder holding device described above.

When using this machine tool, it is possible to automatically perform processing on all the surfaces of a workpiece by, for example, attaching a tool holder to the first main-spindle, attaching a chuck holder or a clamp holder to each of the second and the third main-spindles, grasping the workpiece with a chuck or a clamp mechanism attached to the second main-spindle, processing the third-main-spindle side of the workpiece by using the tool attached to the first main-spindle, and subsequently, grasping the workpiece with the chuck or the clamp mechanism attached to the third main-spindle, and processing the second-main-spindle side of the workpiece by using the tool attached to the first main-spindle.

As another example, it is possible to perform processing while preventing a workpiece from escaping by attaching a tool holder to the first main-spindle, attaching a chuck holder to the second main-spindle, attaching a center holder to the third main-spindle or to the holder holding device, grasping the workpiece with a chuck attached to the second main-spindle, and processing the workpiece with the tool attached to the first main-spindle, while centering the workpiece with the center attached to the third main-spindle or the holder holding device.

Further, while any of the main-spindles described above is used as a first main-spindle, the first main-spindle is provided so as to be movable along three axes of an X-axis, a Y-axis, and a Z-axis, and numerical control is exercised over movements along the three axes. Further, while any of the main-spindles described above is used as a second main-spindle and as a third main-spindle, the second main-spindle and the third main-spindle in a set share the same shaft center.

Further, a swinging mechanism that swings a swinging base is formed by attaching a different one of swinging holders to each of the second and the third main-spindles and attaching the swinging base between the swinging holder attached to the second main-spindle and the swinging holder attached to the third main-spindle. Further, while any of the main-spindles described above is used as a fourth main-spindle, the fourth main-spindle is further attached to the swinging base, in such a manner that the first main-spindle and the fourth main-spindle oppose each other.

A machine tool includes the set made up of the main-spindles and the swinging mechanism described above. When using this machine tool, it is possible to freely set the angle between the first main-spindle and the fourth main-spindle by tilting the swinging mechanism.

It is possible to perform processing while changing the relative angle between a workpiece and a tool by, for example, attaching a tool holder to the first main-spindle, attaching a chuck holder or a clamp holder to the fourth main-spindle, grasping the workpiece with a chuck or a clamp mechanism attached to the fourth main-spindle, and setting the relative angle between the workpiece and the tool to an arbitrary value while tilting the swinging base or causing the swinging base to swing.

Further, by configuring the set made up of the second main-spindle and the third main-spindle so as to be movable, it is possible to perform processing on a workpiece grasped by a chuck or a clamp mechanism attached to the fourth main-spindle, while causing the swinging base to both move and swing.

### First Embodiment

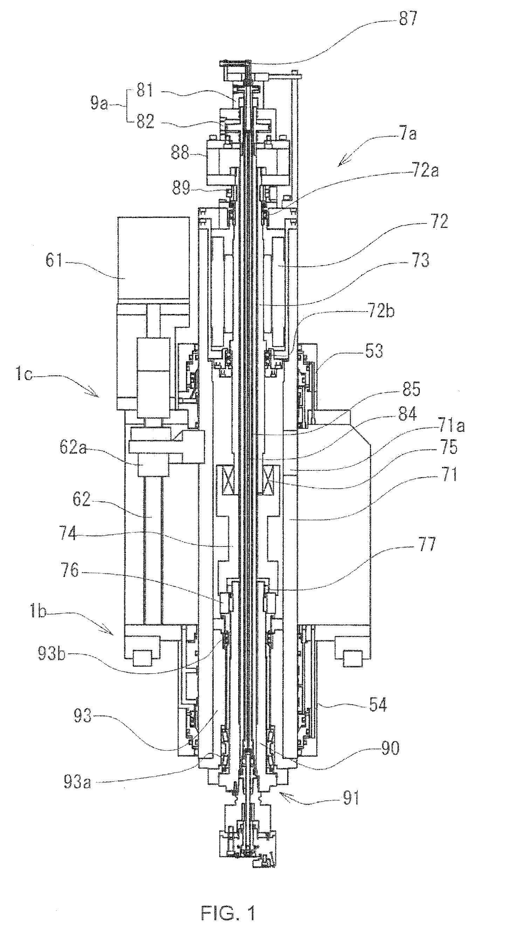

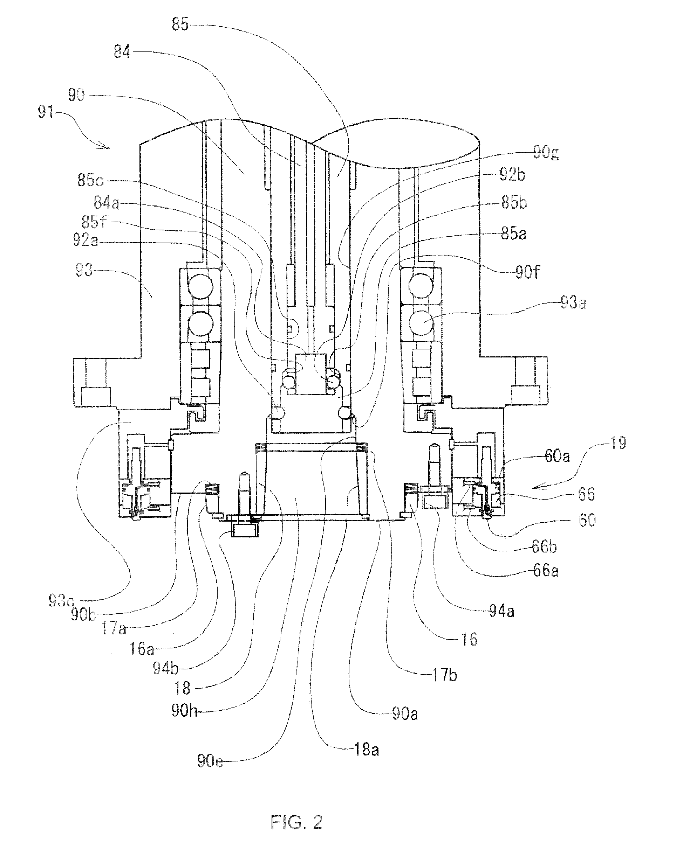

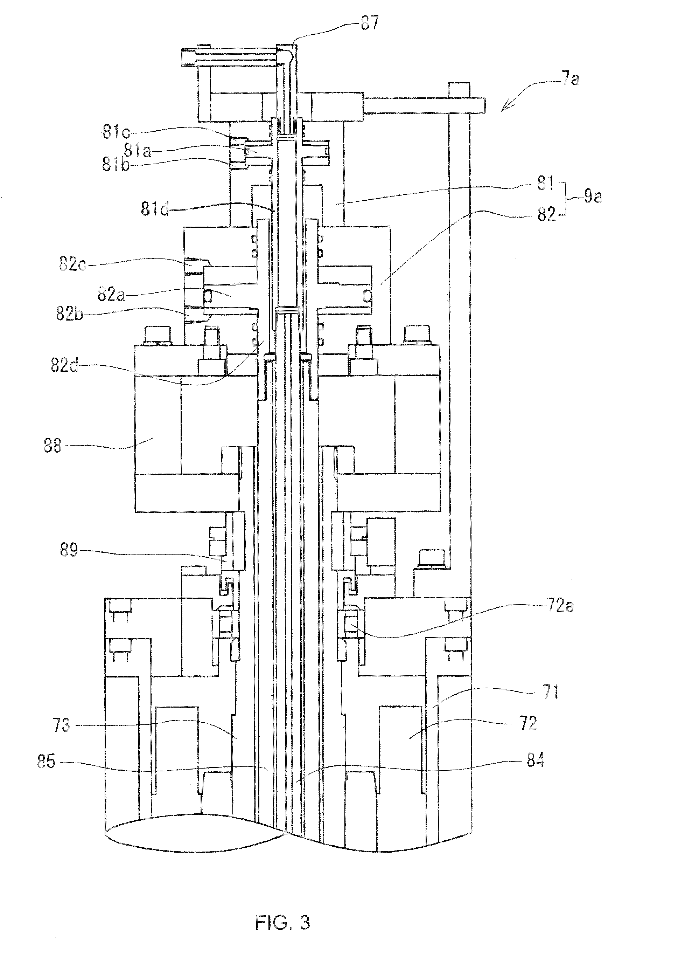

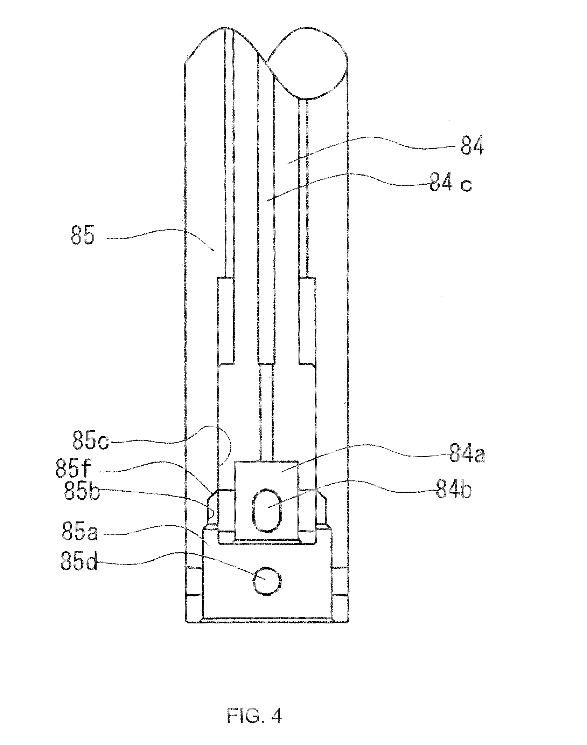

A main-spindle according to a first embodiment of the present invention will be explained with reference to FIGs. 1 to 4. A spindle 91 used in a main-spindle 7a is configured so that a flange is provided on the end face of a spindle case 93 on the front side and so as to have a substantially circular cylindrical shape except for the flange.
A shaft 90 is rotatably attached by a bearing 93a provided on the front side and a bearing 93b provided on the rear side. A front cover 93c is attached to the front surface of the spindle case 93, whereas a rear cover is attached to the rear surface of the spindle case 93. The shaft 90 penetrates through the front cover 93c and the rear cover so as to project to the outside.

An outer sleeve 16 having a tapered outer surface 16a is attached to the outer circumference of the tip end of the shaft 90 on the front side. An outer spring 17a is attached to the rear side of the outer sleeve 16 so that the outer spring 17a pushes the outer sleeve 16 toward the front side. Such a surface of the shaft that is positioned on the rear outer circumference of the outer sleeve 16 will be referred to as a rear abutting surface 90b. A plurality of outer key members 94a are attached by using bolts.

The shaft 90 has a hollow space therein that penetrates through the shaft 90 at the center thereof. An inner sleeve 18 having a tapered inner surface 18a is attached to a position near the tip end of the shaft 90 on the front side. An inner spring 17b is attached to the rear side of the inner sleeve 18 so that the inner spring 17b pushes the inner sleeve toward the front side. Such a tip-end surface of the shaft that is positioned on the front outer circumference of the inner sleeve 18 will be referred to as a front abutting surface 90a. A plurality of inner key members 94b are attached by using bolts.

Further, an outer large-diameter part 90e and an outer small-diameter part 90g are provided on the rear side of a tapered bore 90h formed by the tapered inner surface 18a. A sloped part 90f is provided between the outer large-diameter part 90e and the outer small-diameter part 90g so as to achieve a smooth transition of the shape.

An outer draw bar 85 and an inner draw bar 84 are inserted into the hollow space in the shaft 90. A portion of the outer draw bar 85 near the end thereof on the front side is formed as a circular cylindrical part that has a plurality of ball holes 85d therein so that outer balls 92a are attached thereto, respectively. An outer head space 85a is provided on the rear side of the ball holes 85d. Further, an inner large-diameter part 85b is provided on the rear side of the outer head space 85a, while an inner small-diameter part 85c is provided on the rear side of the inner large-diameter part 85b. Also, a sloped surface 85f is provided between the inner large-diameter part 85b and the inner small-diameter part 85c so as to achieve a smooth transition. Each of the ball holes 85d is formed as a hole in the shape of a circular truncated cone of which the axial line is on the normal line of the outer draw bar 85 and of which the dimension slightly increases toward the exterior, so that the outer balls 92a do not fall inside.

The inner draw bar 84 has a center bore 84c. A portion of the inner draw bar 84 near the end thereof on the front side is fanned as a circular cylindrical part that has a plurality of ball holes 84b therein so that inner balls 92b are attached thereto, respectively. An inner head space 84a is provided on the rear side of the ball holes 84b. Each of the ball holes 84b is formed as an oblong hole that has, on two ends thereof, a half surface of a circular truncated cone of which the axial line is on the normal line of the inner draw bar 84 and of which the dimension slightly increases toward the exterior, so that the inner balls 92b do not fall inside.

Further, an outer gripping mechanism is formed by the outer large-diameter part 90e, the outer small-diameter part 90g, the outer draw bar 85, and the outer balls 92a. A state in which the outer balls 92a are positioned inside the outer large-diameter part 90e is defined as an open state. A state in which the outer balls 92a are positioned inside the outer small-diameter part 90g is defined as a grasped state.

Further, an inner gripping mechanism is formed by the inner large-diameter part 85b, the inner small-diameter part 85c, the inner draw bar 84, and the inner balls 92b. A state in which the inner balls 92b are positioned inside the inner large-diameter part 85b is defined as an open state. A state in which the inner balls 92b are positioned inside the inner small-diameter part 85c is defined as a grasped state.

A connecting ring 76 is attached to the rear side of the shaft 90, and the shaft 90 and the spindle case 93 are fixed to each other in the axial direction by using a nut 77. Further, a key is attached to a space between the connecting ring 76 and the shaft 90. A connecting shaft B 74 is attached to an end face of the connecting ring 76.

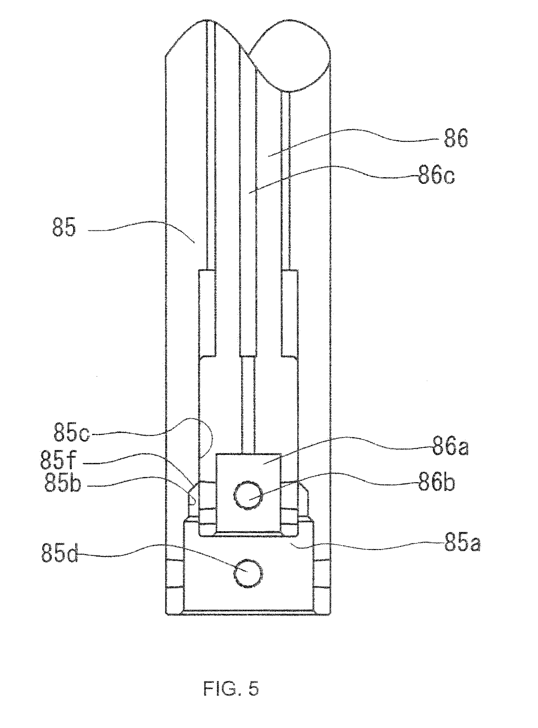

In place of the inner draw bar 84 according to the present embodiment, it is also acceptable to use an inner draw bar 86 as shown in FIG. 5. The inner draw bar 86 is different from the inner draw bar 84 in that each of ball holes 86b is formed as a hole in the shape of a circular truncated cone of which the dimension slightly increases toward the exterior. However, the other configurations of the inner draw bar 86 are the same as those of the inner draw bar 84, e.g., an inner head space 86a is provided on the rear side of the inner ball holes 86b; and the inner draw bar 86 has a center bore 86c.

When the inner draw bar 86 is used, it is necessary to move the inner draw bar 86 in synchronization with the outer draw bar 85 when the outer draw bar 85 is moved. In contrast, when the inner draw bar 84 is used, there is no need to move the inner draw bar 84 in synchronization with the outer draw bar 85. It is possible to move the outer draw bar 85 by itself.

The main-spindle 7a is configured so as to include: a main-spindle tube 71 having a substantially circular cylindrical shape; a built-in motor 72 attached to an rear inner part of the main-spindle tube 71; a connecting shaft A 73; the connecting shaft B 74, the spindle 91 attached to the front of the main-spindle tube 71; a double push-pull mechanism 9a attached to a rear outer part of the main-spindle tube 71; and a rotation detecting unit 89.

The connecting shaft A 73 having a hollow bore is rotatably held by bearings 72a and 72b. The connecting shaft A 73 is attached to the inside of a rotor of the built-in motor 72. The connecting shaft A 73 is thus driven and rotated by the built-in motor 72. Further, the rotation detecting unit 89 and a cylinder base 88 is attached to the connecting shaft A 73.

The outer draw bar 85 and the inner draw bar 84 are inserted into the hollow bore of the connecting shaft B 74. The end of the connecting shaft B 74 on the front side is attached to the connecting ring 76. The connecting shaft B 74 has a recess on the front side, so that an end of the shaft 90 and the nut 77 are stored in the recess on the front side.

After a mecha-lock 75 is put into a recess on the rear side of the connecting shaft B 74, the spindle 91 is inserted into the main-spindle tube 71 from the front side, while the outer draw bar 85 and the inner draw bar 84 are caused to penetrate through the hollow bore of the connecting shaft A 73, so that the spindle 91 is attached to the main-spindle tube 71 by using a bolt.

Further, while the end of the connecting shaft A 73 on the front side is inserted in the mecha-lock 75 positioned in the recess on the rear side of the connecting shaft B 74, a bolt of the mecha-lock 75 is tightened by putting a hand through an operation hole 71a in the main-spindle tube 71, so that the end of the connecting shaft A 73 on the front side is connected to the recess on the rear side of the connecting shaft B.

Further, a lock mechanism 19 is attached to the front cover 93c of the spindle case 93. The lock mechanism 19 includes a lock cylinder 66 and a lock pin 60 having a piston 60a. When a hydraulic pressure is applied to an A port 66a, the lock pin 60 advances toward the front, whereas when a hydraulic pressure is applied to a B port 66b, the lock pin 60 retreats toward the rear.

The double push-pull mechanism 9a is attached to the connecting shaft A 73 via the cylinder base 88, so as to rotate together with the connecting shaft A 73. The double push-pull mechanism 9a includes an outer push-pull mechanism including an outer cylinder 82 and an inner push-pull mechanism including an inner cylinder 81.

The outer cylinder 82 includes an outer piston 82a and an outer rod 82d. The outer rod 82d is connected to the outer draw bar 85, so that the outer draw bar 85 is pulled to the rear when a hydraulic pressure is supplied to an A port 82b, whereas the outer draw bar 85 is pushed to the front when a hydraulic pressure is supplied to a B port 82c.

The inner cylinder 81 includes an inner piston 81a and an inner rod 81d. The inner rod 81d is connected to the inner draw bar 84, so that the inner draw bar 84 is pulled to the rear when a hydraulic pressure is supplied to an A port 81b, whereas the inner draw bar 84 is pushed to the front when a hydraulic pressure is supplied to a B port 81c. Further, a rotary joint 87 is attached to the inner rod 81d so as to provide piping for compressed air.

The main shaft 7a is configured so that the rotation force of the built-in motor 72 rotates the shaft 90 of the spindle 91 via the connecting shaft A 73, the mecha-lock 75, the connecting shaft B 74, and the connecting ring 76. Further, the compressed air supplied to the inner rod 81 d goes through the inner rod 81d and the center bore 84c of the inner draw bar 84 so as to spurt out into the tapered bore 90h and thus prevents unwanted substances such as machining swarf from entering the tapered bore 90h.

When the main-spindle 7a according to the first embodiment is used in a machine tool such as a machining center 15, a rear static pressure guide 53 and a front static pressure guide 54 to which lubricant oil is supplied are provided, so as to guide a large part of the circumference of the main-spindle tube 71. Further, a Z-axis moving mechanism 1c that moves the main-spindle 7a in the Z-axis direction is provided by using a Z-axis driving device including a Z nut 62a, a Z ball screw 62, and a Z servo motor 61. Further, an X-axis moving mechanism 1b including an X-axis driving device and a Y-axis moving mechanism 1a including a Y-axis driving mechanism are attached so as to exercise numerical control over the three axes, i.e., the X-axis, the Y-axis, and the Z-axis.

### Second Embodiment

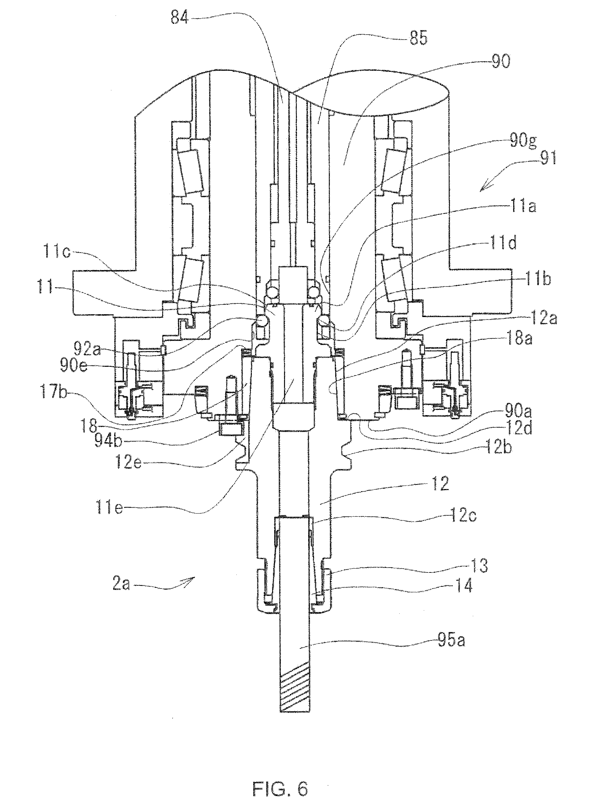

Tool holders according to a second embodiment will be explained with reference to FIGs. 6 to 8. FIGs. 6 to 8 each depict a state in which a tool holder (2a/2b/2c) is grasped by the spindle 91. Each of the tool holders 2a to 2c includes an outer pull stud 11 as an outer grasped part. Although each of the tool holders 2a to 2c does not need to have an inner grasped part, the outer pull stud 11 is configured so as to have a hole 11e therein through which an inner pull stud can penetrate. As a result, the outer pull stud can be used in other holders, and it is therefore possible to share component parts among different applications.

The outer pull stud 11 includes an outer head 11a and an outer neck 11b. A chamfered part 11c is provided on the rear end thereof. A sloped part 11d is provided between the outer head 11a and the outer neck 11b so as to achieve a smooth transition of the shape. The outer pull stud 11is attached to a holder base 12/20/26.

When the outer balls 92a are positioned inside the outer large-diameter part 90e so that the outer gripping mechanism in an open state, upon inserting the outer pull stud therein, the outer head 11 a of the outer pull stud 11 pushes the outer balls 92a outwardly in the normal line direction, so that the outer head 11 a enlarges the gap between the outer balls 92a so as to go through the gap and go into the outer head space 85a.

Subsequently, when the outer draw bar 85 is moved rearward, the outer balls 92a move so as to be positioned inside the outer small-diameter part 90g. The outer balls 92a move inwardly in the normal line direction and grip the outer head 11 a, while the outer balls 92a are pushing the sloped part 11d, so that a grasped state is achieved in which the outer pull stud 11 is grasped by the outer griping mechanism.

The holder base 12 in the tool holder 2a (FIG. 6) is configured so as to include: a small groove 12b; a tapered outer surface 12a that is tapered in the same manner as the tapered inner surface 18a of the inner sleeve 18; a tool hole 12c; a front abutted surface 12d; and a key groove 12e. By inserting a tool such as an end mill 95a into an insert 14 attached to the tool hole 12c and fixing the tool by using a nut 13, it is possible to fix the tool such as the end mill 95a.

Further, when the outer pull stud 11 is inserted into the outer gripping mechanism in the open state, the inner key members 94b go into the key groove 12e. When the outer head 11 a has entered the outer head space 85a, the tapered inner surface 18a comes into contact with the tapered outer surface 12a. It is ensured, however, that there is a gap between the front abutting surface 90a of the shaft 90 and the front abutted surface 12d.

Further, in the process of putting the outer gripping mechanism into the grasped state by pulling the outer draw bar 85 to the rear, the inner sleeve 18 and the holder base 12 are pulled in toward the rear while the inner spring 17b contracts. When the outer gripping mechanism has been brought into the grasped state, the tapered inner surface 18a is in close contact with the tapered outer surface 12a, while the front abutting surface 90a is in close contact with the front abutted surface 12d, so that the shaft 90 and the holder base 12 are joined with each other by the planar contacts in the two places.

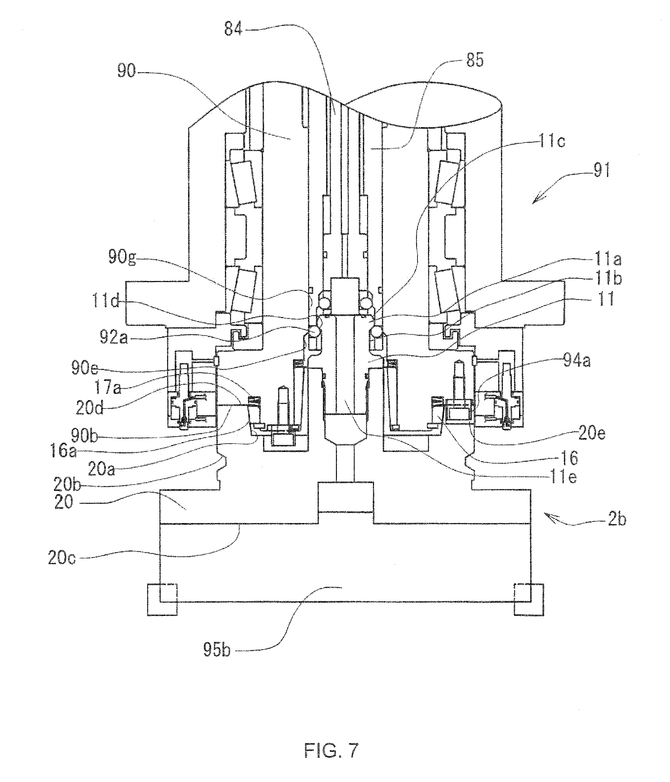

The holder base 20 in the tool holder 2b (FIG. 7) is configured so as to include: a large groove 20b, a tapered inner surface 20a that is tapered in the same manner as the tapered outer surface 16a of the outer sleeve 16; a rear abutted surface 20d, and a key groove 20e. It is possible to attach a tool such as a milling cutter 95b onto an attachment surface 20c.

Further, when the outer pull stud 11 is inserted into the outer gripping mechanism in the open state, the outer key members 94a go into the key groove 20e. When the outer head 11a has entered the outer head space 85a, the tapered outer surface 16a comes into contact with the tapered inner surface 20a. It is ensured, however, that there is a gap between the rear abutting surface 90b of the shaft 90 and the rear abutted surface 20d.

Further, in the process of putting the outer gripping mechanism into the grasped state by pulling the outer draw bar 85 to the rear, the outer sleeve 16 and the holder base 20 are pulled in toward the rear while the outer spring 17a contracts. When the outer gripping mechanism has been brought into the grasped state, the tapered outer surface 16a is in close contact with the tapered inner surface 20a, while the rear abutting surface 90b is in close contact with the rear abutted surface 20d, so that the shaft 90 and the holder base 20 are joined with each other by the planar contacts in the two places.

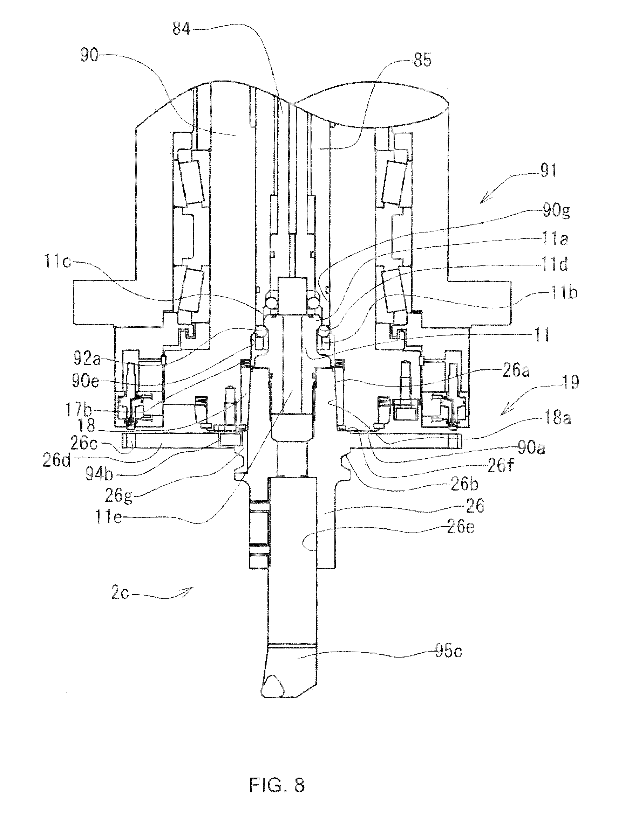

The holder base 26 in the tool holder 2c (FIG. 8) is configured so as to include: a small groove 26b, a tapered outer surface 26a that is tapered in the same manner as the tapered inner surface 18a of the inner sleeve 18; a front abutted surface 26f, and a key groove 26g. It is possible to attach a cutting tool 95c to an attachment hole 26e.

Further, when the outer pull stud 11 is inserted into the outer gripping mechanism in the open state, the inner key members 94b go into the key groove 26g. When the outer head 11a has entered the outer head space 85a, the tapered inner surface 18a comes into contact with the tapered outer surface 26a. It is ensured, however, that there is a gap between the front abutting surface 90a of the shaft 90 and the front abutted surface 26f.

Further, in the process of putting the outer gripping mechanism into the grasped state by pulling the outer draw bar 85 to the rear, the inner sleeve 18 and the holder base 26 are pulled in toward the rear while the inner spring 17b contracts. When the outer gripping mechanism has been brought into the grasped state, the tapered inner surface 18a is in close contact with the tapered outer surface 26a, while the front abutting surface 90a is in close contact with the front abutted surface 26f, so that the shaft 90 and the holder base 26 are joined with each other by the planar contacts in the two places.

Further, the holder base 26 has a flange 26d. The flange 26d is provided with a position determining hole 26c as appropriate, so that the position of the position determining hole 26c is in alignment with the lock pin 60 in the lock mechanism 19 of the main-spindle by exercising numerical control over the stopping angle of the shaft 90. The tip end of the lock pin 60 is inserted into the position determining hole 26c by applying a hydraulic pressure to the A port 66a, so that it is possible to hold the cutting tool 95 with a high level of angle precision.

### Third Embodiment

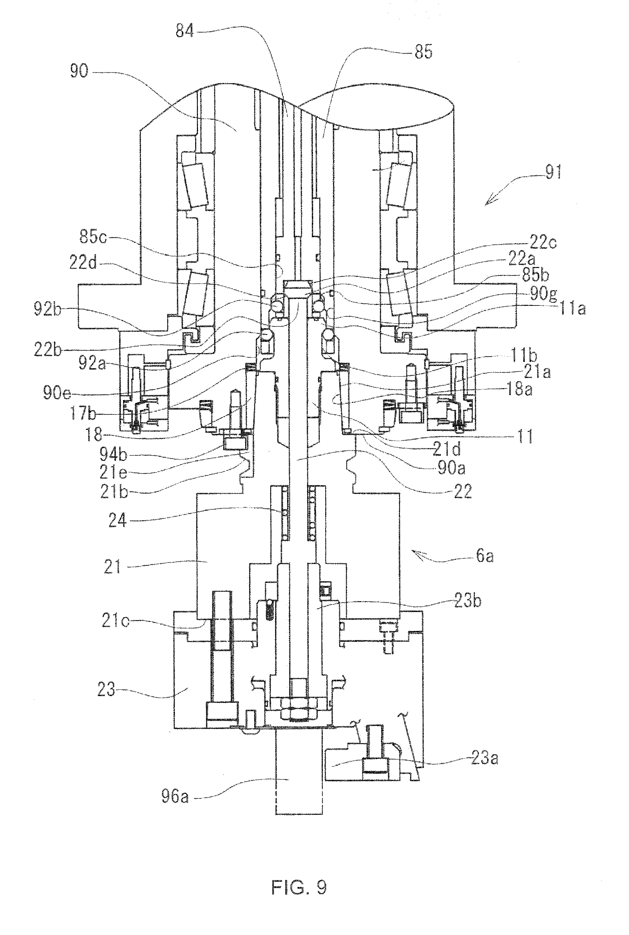

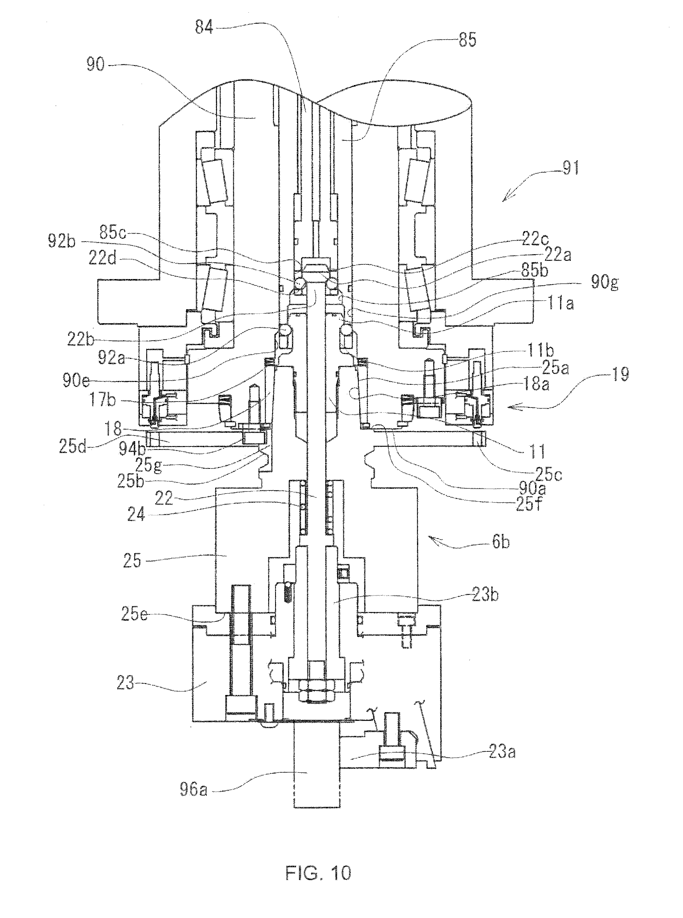

Chuck holders according to a third embodiment will be explained with reference to FIGs. 9 to 12. FIGs. 9 to 12 each depict a state in which a chuck holder is grasped by the spindle. FIG. 9 depicts a state before a workpiece is grasped by a chuck. FIGs. 10 to 12 each depict a state in which a workpiece is grasped by a chuck.

Chuck holders 6a to 6d include holder bases 21, 25, 31 and 34, respectively. A chuck 23/33 is attached to an attachment surface 21c/25e/31c/34e. Further, the outer pull stud 11 is provided as an outer grasped part, whereas an inner pull stud 22/32 is provided as an inner grasped part.

The outer pull stud 11 includes the outer head 11a and the outer neck 11b. The chamfered part 11c is provided on the rear end thereof. The sloped part 11d is provided between the outer head 1 1a and the outer neck 11b so as to achieve a smooth transition of the shape. The inner pull stud 22/32 is inserted into the hole 11e provided in the outer pull stud 11.

The inner pull stud 22/32 includes an inner head 22a/32a and an inner neck 22b/32b. A chamfered part 22c/32c is provided on the rear end thereof. A sloped part 22d132ci is provided between the inner head 22a/32a and the inner neck 22b/32b so as to achieve a smooth transition of the shape.

Further, the inner pull stud 22 is attached to a jaw slide 23b of the chuck 23, so that a claw 23a is pushed in the direction to open up by a reaction force of a spring 24. In contrast, the inner pull stud 32 is attached to a jaw slide 33b of the chuck 33 with no spring.

Further, when the outer gripping mechanism and the inner gripping mechanism are brought into the open state, and the outer pull stud 11 and the inner pull stud 22/32 are inserted therein respectively, the outer head 11a a of the outer pull stud 11 pushes the outer balls 92a outwardly in the normal line direction, so that the outer head 11 a enlarges the gap between the outer balls 92a so as to go through the gap and go into the outer head space 85a. Also, the inner head 22a/32a of the inner pull stud 22/32 pushes the inner balls 92b outwardly in the normal line direction, so that the inner head 22a/32a enlarges the gap between the inner balls 92b so as to go through the gap and go into the inner head space 84a.

After that, when the outer draw bar 85 is moved rearward, the outer balls 92a move so as to be positioned inside the outer small-diameter part 90g. In the process, the outer balls 92a move inwardly in the normal line direction and grip the outer head 11a, while the outer balls 92a are pushing the sloped part 11d, so that a grasped state is achieved in which the outer head 11 a is grasped by the outer gripping mechanism.

Because the outer head 11 a is grasped by the outer gripping mechanism, the chuck 23/33 is in a state of being grasped by the spindle 91. Because the ball holes 84b in the inner draw bar 84 are oblong, there is no need to move the inner draw bar 84 together with the outer draw bar 85 when the outer draw bar 85 is moved.

To grasp a workpiece 96a/96b with the chuck 23133, the inner draw bar 84 is moved rearward. When the inner draw bar 84 is moved rearward, the inner balls 92b move so as to be positioned inside the inner small-diameter part 85c. The inner balls 92b move inwardly in the normal line direction and grip the inner head 22a/32a, while the inner balls 92b are pushing the sloped part 22d132d, so that a grasped state is achieved in which the inner head 22a/32a is grasped by the inner gripping mechanism. Further, when the inner draw bar 84 is moved rearward, the jaw slide 23b/33b is pulled to the rear together with the inner pull stud 22/32, so that the claw 23a/33a moves inwardly so as to grasp the workpiece 96a/96b.

To remove the workpiece 96a/96b, the inner draw bar 84 is moved forward so that the jaw slide 23b/33b is pushed to the front together with the inner pull stud 22/32 and so that the claw 23a/33a is moved outwardly. Because the spring 24 is attached to the chuck holder 6a/6b so as to apply a force in the direction to open up the claw 23a, an excellent responsiveness in the opening of the claw 23a is achieved.

The holder base 21/25 in the chuck holder 6a/6b (FIG. 9/FIG. 10) is configured so as to include: a small groove 21b/25b; a tapered outer surface 21a/25a that is tapered in the same manner as the tapered inner surface 18a of the inner sleeve 18; a front abutted surface 21d/25f; and a key groove 21e/25g.

Further, when the outer pull stud 11 is inserted into the outer gripping mechanism in the open state and the inner pull stud 22 is inserted into the inner gripping mechanism in the open state, the inner key members 94b go into the key groove 21e/25g. When the outer head 11 a has entered the outer head space 85a and the inner head 22a has entered the inner head space 84a, the tapered inner surface 18a comes into contact with the tapered outer surface 21a/25a. It is ensured, however, that there is a gap between the front abutting surface 90a of the shaft 90 and the front abutted surface 21d/25f.

Further, in the process of putting the outer gripping mechanism into the grasped state by pulling the outer draw bar 85 to the rear, the inner sleeve 18 and the holder base 21/25 are pulled in toward the rear while the inner spring 17b contracts. When the outer gripping mechanism has been brought into the grasped state, the tapered inner surface 18a is in close contact with the tapered outer surface 21a/25a, while the front abutting surface 90a is in close contact with the front abutted surface 21d/25f, so that the shaft 90 and the holder base 21/25 are joined with each other by the planar contacts in the two places.

Further, the holder base 25 of the chuck holder 6b has a flange 25d. The flange 25d is provided with a position determining hole 25c as appropriate, so that the position of the position determining hole 25c is in alignment with the lock pin 60 in the lock mechanism 19 of the main shaft by exercising numerical control over the stopping angle of the shaft 90. The tip end of the lock pin 60 is inserted into the position determining hole 25c by applying a hydraulic pressure to the A port 66a.

One of the purposes is to obtain a configuration in which the chuck 23 is held with a high level of precision in terms of the angle position thereof, so that it is possible to perform processing with a high level of precision when the workpiece 96a grasped by the chuck 23 is processed without being rotated.

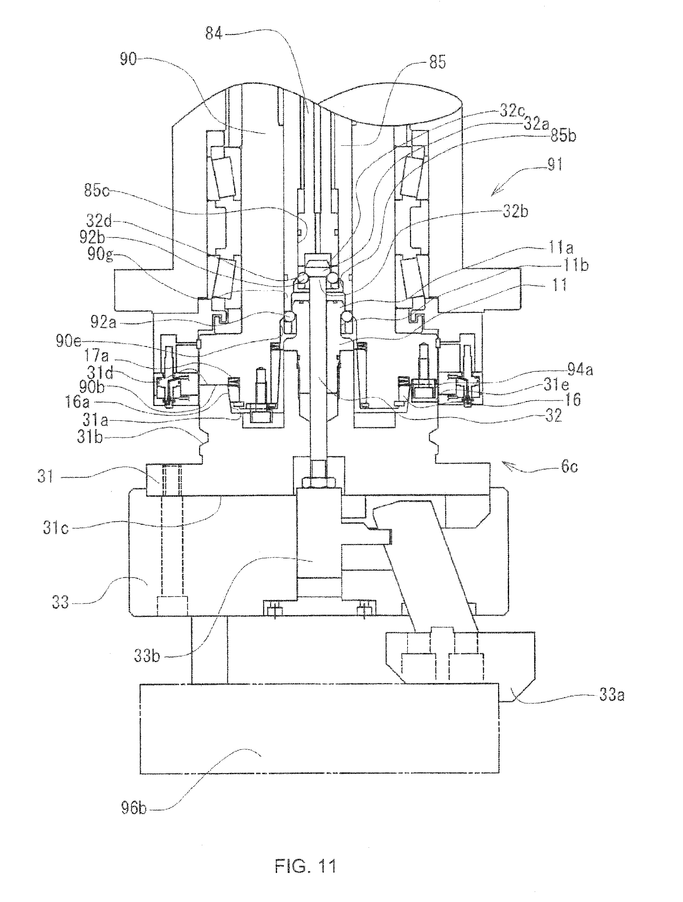

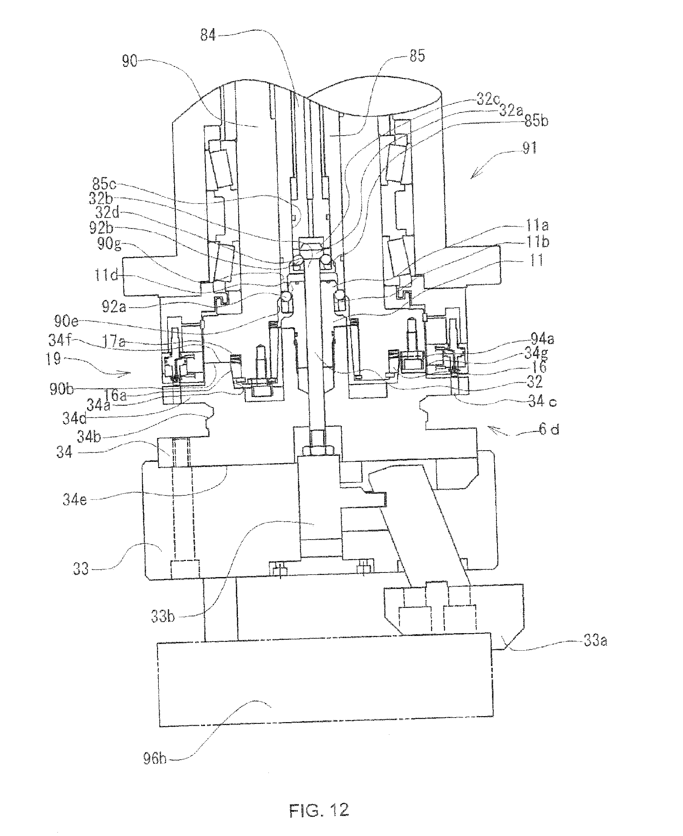

The holder base 31/34 in the chuck holder 6c/6d (FIG. 11/FIG. 12) is configured so as to include: a large groove 31b/34b; a tapered inner surface 31a/34a that is tapered in the same manner as the tapered outer surface 16a of the outer sleeve 16; a rear abutted surface 31d/34f; and a key groove 31e/34g.

Further, when the outer pull stud 11 is inserted into the outer gripping mechanism in the open state and the inner pull stud 32 is inserted into the inner gripping mechanism in the open state, the outer key members 94a go into the key groove 31e/34g. When the outer head 11a has entered the outer head space 85a and the inner head 32a has entered the inner head space 84a, the tapered outer surface 16a of the outer sleeve 16 comes into contact with the tapered inner surface 31a/34a of the holder base 31/34. It is ensured, however, that there is a gap between the rear abutting surface 90b of the shaft 90 and the rear abutted surface 31d/34f.

Further, in the process of putting the outer gripping mechanism into the grasped state by pulling the outer draw bar 85 to the rear, the outer sleeve 16 and the holder base 31/34 are pulled in toward the rear while the outer spring 17a contracts. When the outer gripping mechanism has been brought into the grasped state, the tapered outer surface 16a of the outer sleeve 16 is in close contact with the tapered inner surface 31a/34a of the holder base 31/34, while the rear abutting surface 90b of the shaft 90 is in close contact with the rear abutted surface 31d/34f of the holder base 31/34, so as to achieve a joining structure realized by the planar contacts in the two places.

Further, the holder base 34 of the chuck holder 6d has a flange 34d. The flange 34d is provided with a position determining hole 34c as appropriate, so that the position of the position determining hole 34c is in alignment with the lock pin 60 in the lock mechanism 19 of the main-spindle by exercising numerical control over the stopping angle of the shaft 90. The tip end of the lock pin 60 is inserted into the position determining hole 34c by applying a hydraulic pressure to the A port 66a.

One of the purpose is to obtain a configuration in which the chuck 33 is held with a high level of precision in terms of the angle position thereof, so that it is possible to perform processing with a high level of precision when the workpiece 96b grasped by the chuck 33 is processed without being rotated.

### Fourth Embodiment

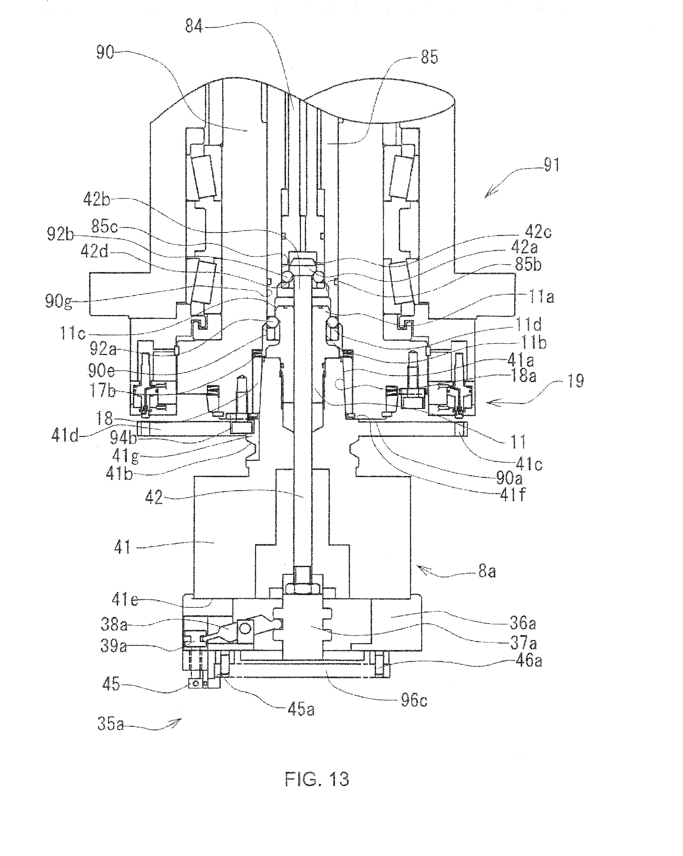

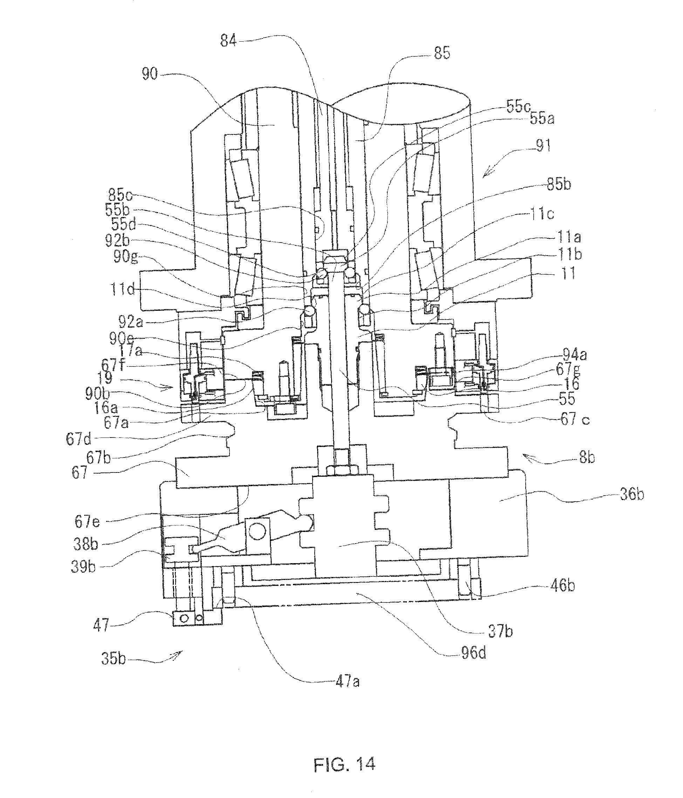

Clamp holders according to a fourth embodiment will be explained with reference to FIGs. 13 and 14. Fig. 13 and 14 each depict a state in which a clamp holder is grasped by the spindle, and further, a workpiece is grasped by a clamp mechanism attached to the clamp holder.

Clamp holders 8a and 8b include holder bases 41 and 67, respectively. A clamp mechanism 35a/35b is attached to an attachment surface 41e/67e of the holder base 41/67. Further, the outer pull stud 11 is provided as an outer grasped part, whereas an inner pull stud 42/55 is provided as an inner grasped part. The outer pull stud 11 includes the outer head 11a and the outer neck 11b. The chamfered part 11c is provided on the rear end thereof. The sloped part 11d is provided between the outer head 11a and the outer neck 11b so as to achieve a smooth transition of the shape. The inner pull stud 42/55 includes an inner head 42a/55a and an inner neck 42b/55b. A chamfered part 42c/55c is provided on the rear end thereof. A sloped part 42d/55d is provided between the inner head 42a/55a and the inner neck 42b/55b so as to achieve a smooth transition of the shape.

The clamp mechanism 35a/35b is configured so as to include: a clamp base 36a/36b having a hollow space therein; a slide 37a/37b that has a recess and is movable in front-and-back directions; and a moving block 39a/39b that has a recess and is movable in front-and-back directions. A reversing frame 38a/38b is installed while one end thereof is inserted into the recess of the slide 37a/37b, whereas the other end thereof is inserted into the recess of the moving block 39a/39b. The reversing frame 38a/38b is configured so as to be able to swing on a pin provided at the center thereof. A clamp arm 45/47 is attached to the moving block 39a/39b by using a pin-joint joining method, so that the clamp arm 45/47 is able to swing. A position determining pin 46a/46b is also provided. Further, the inner pull stud 42/55 is connected to the slide 37a/37b.

Further, when the outer gripping mechanism and the inner gripping mechanism are brought into the open state, and the outer pull stud 11 and the inner pull stud 42/55 are inserted therein respectively, the outer head 11a of the outer pull stud 11 pushes the outer balls 92a outwardly in the normal line direction, so that the outer head 11 a enlarges the gap between the outer balls 92a so as to go through the gap and go into the outer head space 85a. Also, the inner head 42a/55a of the inner pull stud 42/55 pushes the inner balls 92b outwardly in the normal line direction, so that the inner head 42a/55a enlarges the gap between the inner balls 92b so as to go through the gap and go into the inner head space 84a.

After that, when the outer draw bar 85 is moved rearward, the outer balls 92a move so as to be positioned inside the outer small-diameter part 90g. The outer balls 92a move inwardly in the normal line direction and grip the outer head 11a, while the outer balls 92a are pushing the sloped part 11d, so that a grasped state is achieved in which the outer pull stud 11 is grasped by the outer gripping mechanism.

Because the outer pull stud 11 is grasped by the outer gripping mechanism, the clamp mechanism 35a/35b is in a state of being grasped by the spindle 91. According to the present embodiment, because the ball holes 84b in the inner draw bar 84 are oblong, there is no need to move the inner draw bar 84 together with the outer draw bar 85 when the outer draw bar 85 is moved.

To grasp a workpiece 96c/96d with the clamp mechanism 35a/35b, the inner draw bar 84 is moved rearward. When the inner draw bar 84 is moved rearward, the inner balls 92b move so as to be positioned inside the inner small-diameter part 85c. The inner balls 92b move inwardly in the normal line direction and grip the inner head 42a/55a, while the inner balls 92b are pushing the sloped part 42d/55d, so that a grasped state is achieved in which the inner pull stud 42/55 is grasped by the inner gripping mechanism.

Further, when the inner draw bar 84 is moved rearward, the slide 37a/37b is pulled to the rear together with the inner pull stud 42/55. When the slide 37a/37b moves rearward, the reversing frame 38a/38b reverses so as to push the moving block 39a/39b forward. When the moving block 39a/39b moves forward, the clamp arm 45/47 reverses so that a clamp surface 45a/47a presses the workpiece 96c/96d against the clamp base 36a/36b. The workpiece 96c/96d is thus clamped with a high level of precision while the position thereof is being determined by the position determining pin 46a/46b.

The holder base 41 in the clamp holder 8a (FIG. 13) is configured so as to include: a small groove 41b; a tapered outer surface 41a that is tapered in the same manner as the tapered inner surface 18a of the inner sleeve 18; a front abutted surface 41f; and a key groove 41 g.

Further, when the outer pull stud 11 is inserted into the outer gripping mechanism in the open state, the inner key members 94b go into the key groove 41 g. When the outer head 11a has entered the outer head space 85a, the tapered inner surface 18a comes into contact with the tapered outer surface 41a. It is ensured, however, that there is a gap between the front abutting surface 90a of the shaft 90 and the front abutted surface 41 f.

Further, in the process of putting the outer gripping mechanism into the grasped state by pulling the outer draw bar 85 to the rear, the inner sleeve 18 and the holder base 41 are pulled in toward the rear while the inner spring 17b contracts. When the outer gripping mechanism has been brought into the grasped state, the tapered inner surface 18a is in close contact with the tapered outer surface 41a, while the front abutting surface 90a is in close contact with the front abutted surface 41f, so that the shaft 90 and the holder base 41 are joined with each other by the planar contacts in the two places.

Further, the holder base 41 has a flange 41d. The flange 41d is provided with a position determining hole 41c as appropriate, so that the position of the position determining hole 41 c is in alignment with the lock pin 60 in the lock mechanism 19 of the main-spindle by exercising numerical control over the stopping angle of the shaft 90. The tip end of the lock pin 60 is inserted into the position determining hole 41c by applying a hydraulic pressure to the A port 66a.

One of the purposes is to obtain a configuration in which the clamp mechanism 35a is held with a high level of precision in terms of the angle position thereof, so that it is possible to perform processing with a high level of precision when the workpiece 96c grasped by the clamp mechanism 35a is processed without being rotated.

The holder base 67 in the clamp holder 8b (FIG. 14) is configured so as to include: a large groove 67b, a tapered inner surface 67a that is tapered in the same manner as the tapered outer surface 16a of the outer sleeve 16; a rear abutted surface 67f, and a key groove 67g.

Further, when the outer pull stud 11 is inserted into the outer gripping mechanism in the open state, the outer key members 94a go into the key groove 67g. When the outer head 11a has entered the outer head space 85a, the tapered outer surface 16a comes into contact with the tapered inner surface 67a. It is ensured, however, that there is a gap between the rear abutting surface 90b of the shaft 90 and the rear abutted surface 67f.

Further, in the process of putting the outer gripping mechanism into the grasped state by pulling the outer draw bar 85 to the rear, the outer sleeve 16 and the holder base 67 are pulled in toward the rear while the outer spring 17a contracts. When the outer gripping mechanism has been brought into the grasped state, the tapered outer surface 16a is in close contact with the tapered inner surface 67a, while the rear abutting surface 90b is in close contact with the rear abutted surface 67f, so that the shaft 90 and the holder base 67 are joined with each other by the planar contacts in the two places.

Further, the holder base 67 has a flange 67d. The flange 67d is provided with a position determining hole 67c as appropriate, so that the position of the position determining hole 67c is in alignment with the lock pin 60 in the lock mechanism 19 of the main-spindle by exercising numerical control over the stopping angle of the shaft 90. The tip end of the lock pin 60 is inserted into the position determining hole 67c by applying a hydraulic pressure to the A port 66a.

One of the purposes is to obtain a configuration in which the clamp mechanism 35b is held with a high level of precision in terms of the angle position thereof, so that it is possible to perform processing with a high level of precision when the workpiece 96d grasped by the clamp mechanism 35b is processed without being rotated.

### Fifth Embodiment

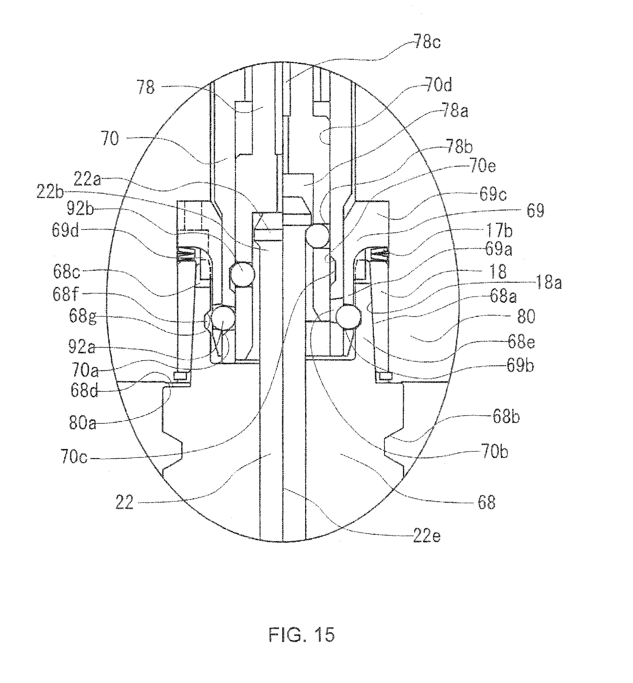

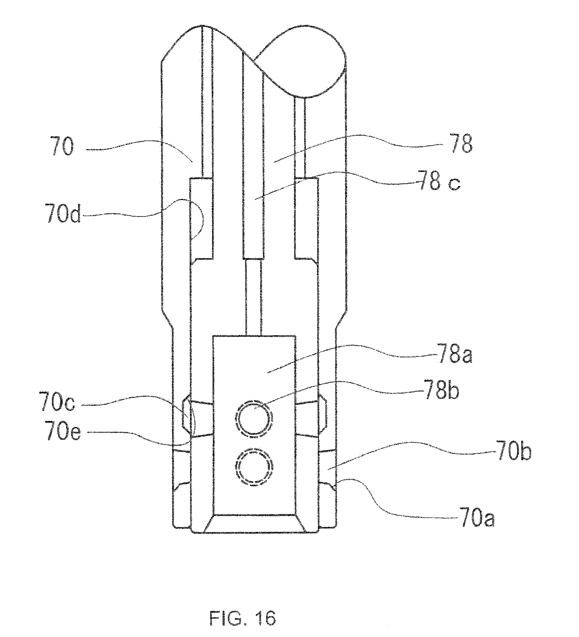

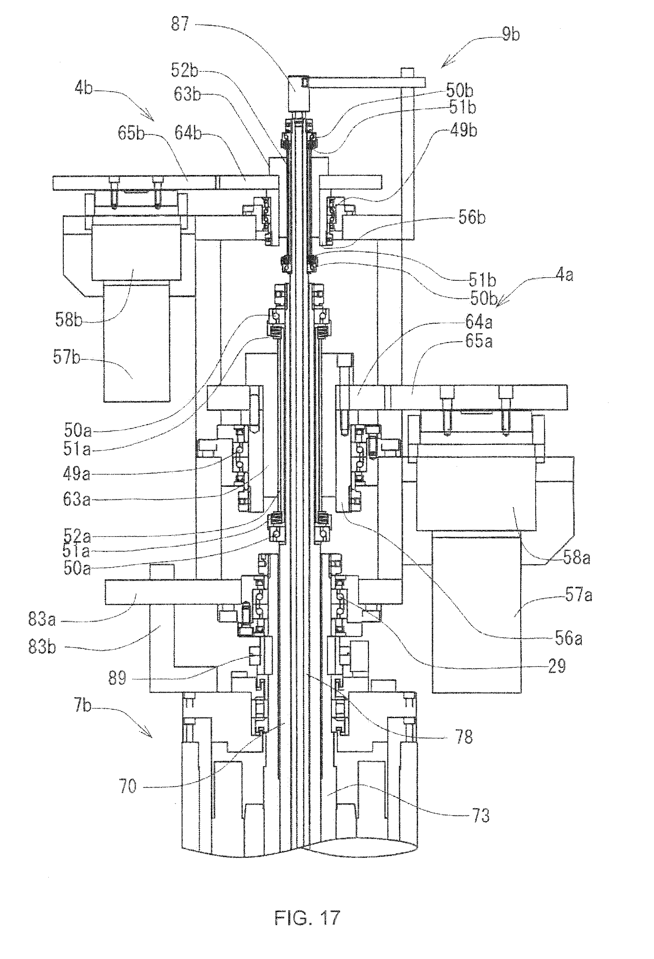

A main-spindle according to a fifth embodiment will be explained with reference to FIGs. 15 to 17. FIG. 15 is divided into two sections on the left and the right by a center dividing line 22e that extends through the center of the inner pull stud 22. The section on the left depicts the state in which the outer gripping mechanism and the inner gripping mechanism are in the open state. The section on the right depicts the state in which the outer gripping mechanism and the inner gripping mechanism are in the grasped state. Further, a main-spindle 7b according to the fifth embodiment is different from the main-spindle 7a according to the first embodiment, only for the configurations of the outer gripping mechanism, the inner gripping mechanism, and a double push-pull mechanism 9b. To avoid duplications, only the features that are different from those of the main-spindle 7a will be described below.

The outer gripping mechanism of the main-spindle 7b according to the fifth embodiment is configured so as to include: an outer draw bar 70, the outer balls 92a, a fixed guide 69. The inner gripping mechanism is configured so as to include an inner large-diameter part 70c, an inner small-diameter part 70d, an inner draw bar 78, and the inner balls 92b.

The fixed guide 69 is configured so as to include a tube part 69a having a circular cylindrical shape and a flange 69c. The fixed guide 69 is fixed to a shaft 80 by fixing the flange 69c with a bolt. A space into which a substantially circular cylindrical part 68e serving as an outer grasped part can be inserted is provided between the outer surface of the tube part 69a and the tapered inner surface 18a of the inner sleeve 18. A small gap is provided between the inner surface of the substantially circular cylindrical part 68e and the outer surface of the tube part 69a.

Further, the fixed guide 69 is provided with a projection 69d so that when the substantially circular cylindrical part 68e is inserted, the projection 69d goes into a recess 68c provided at the tip end of the substantially circular cylindrical part 68e, so as to prevent the substantially circular cylindrical part 68e from rotating relative to the fixed guide 69. Further, the tube part 69a is provided with a plurality of guide holes 69b. Each of the guide holes 69b is formed as a hole in the shape of a circular truncated cone of which the axial line is on the normal line of the outer draw bar 70 and of which the dimension slightly decreases toward the exterior, so that the outer balls 92a do not fall outside.

Further, the outer draw bar 70 is inserted into the fixed guide 69. A portion of the outer draw bar 70 near the end thereof on the front side is formed as a circular cylindrical part that has a plurality of ball holes 70b therein. Each of the ball holes 70b is formed as a hole in the shape of a circular truncated cone of which the axial line is on the normal line of the outer draw bar 70 and of which the dimension slightly decreases toward the interior, so that the outer balls 92a do not fall inside. Each of the outer balls 92a is disposed so as to be stored in both one of the ball holes 70b and one of the guide holes 69b at the same time. Each of the outer balls 92a is provided for a different one of the sets each made up of a ball hole 70b and a guide hole 69b.

Further, a front sloped surface 70a is provided in an area that is on the front side of the ball holes 70b and is on the outer side of the outer draw bar. The front sloped surface 70a is configured with a part of a spherical surface of a sphere having the center thereof positioned closer to the front side than the centers of ball holes 70b are and closer to the outside than the outer surface of the outer draw bar 70 is, while the diameter of the sphere is slightly larger than those of the outer balls 92a.

Further, an inner large-diameter part 70c is provided in an area that is on the rear side of the ball holes 70b and is on the inner side of the outer draw bar 70. Further, the inner small-diameter part 70d is provided in an area on the rear side of the inner large-diameter part 70c. Also, a sloped surface 70e is provided between the inner large-diameter part 70c and the inner small-diameter part 70d.

The inner draw bar 78 has a center bore 78c. A portion of the inner draw bar 78 near the end thereof on the front side is formed as a circular cylindrical part that has a plurality of ball holes 78b therein. The inner balls 92b are attached thereto, respectively. An inner head space 78a is provided on the rear side of the ball holes 78b. Each of the ball holes 78b is formed as a hole having a surface of a circular truncated cone of which the axial line is on the normal line of the inner draw bar 78 and of which the dimension slightly increases toward the exterior, so that the inner balls 92b do not fall inside the circular cylindrical part.

Further, a state in which the ball holes 70b provided in the outer draw bar 70 substantially match the guide holes 69b provided in the fixed guide 69 is defined as an open state. When the substantially circular cylindrical part 68e is inserted in the outer circumference of the tube part 69a of the fixed guide 69 while being in the open state, each of the outer balls 92a is stored in both one of the ball holes 70b and one of the guide holes 69b at the same time, so as not to prevent the substantially circular cylindrical part 68e from being inserted.

A holder base 68 grasped by a grasping mechanism according to the fifth embodiment is configured so as to include: a small groove 68b; and the substantially circular cylindrical part 68e that serves as the outer grasped part and is provided with a grasped groove 68f. The holder base 68 further includes a rear sloped surface 68g provided on the rear side of the grasped groove 68f. Further, the inner pull stud 22 including the inner head 22a and the inner neck 22b is provided as an inner grasped part.

When the substantially circular cylindrical part 68e is inserted into the outer gripping mechanism while being in the open state, so that the tapered inner surface 18a of the inner sleeve 18 is in contact with the tapered outer surface 68a of the substantially circular cylindrical part 68e, the grasped groove 68f is configured so as to be positioned closer to the front side than the guide holes 69b are, while ensuring that there is a gap between a front abutted surface 68d of the holder base 68 and a front abutting surface 80a of the shaft 80.

When the outer draw bar 70 is moved rearward while the substantially circular cylindrical part 68e is inserted, the outer balls 92a move outwardly in the normal line direction by being pushed by the front sloped surface 70a of the ball holes 70b, so that the outer balls 92a push the rear sloped surface 68g of the grasped groove 68frearward.

Further, the substantially circular cylindrical part 68e pushed by the outer balls 92 as well as the inner sleeve 18 are pulled in toward the rear while compressing the inner spring 17b and stop when the front abutted surface 68d comes into close contact with the front abutting surface 80a. Further, the outer balls 92a pushed by the front sloped surface 70a of the outer draw bar 70 push the rear sloped surface 68g of the grasped groove 68f, so that a grasped state is achieved in which the substantially circular cylindrical part 68e is gripped by the outer gripping mechanism.

The double push-pull mechanism 9b is configured so as to include: an outer push-pull mechanism including an outer electric cylinder 4a; and an inner push-pull mechanism including an inner electric cylinder 4b. A push-pull base 83a is attached, via a bearing 29, to the connecting shaft A 73 that rotates together with the shaft 80 of the spindle. A stopper 83b is attached so that the push-pull base 83a does not rotate.

The outer electric cylinder 4a is configured so as to include: an outer nut holder 56a attached to the push-pull base 83a via an outer bearing 49a; and an outer push-pull nut 63a and an outer driven gear 64a that are provided so as to be rotatable together with the outer nut holder 56a. Further, an outer ball screw 52a, which is hollow, is attached to the outer draw bar 70 via an outer bearing 50a and an outer spring 51 a, so that the outer ball screw 52a does not rotate together with rotations of the outer draw bar 70.

Further, an outer reduction gear 58a and an outer servo motor 57a are attached to the push-pull base 83a, so that an outer driving gear 65a attached to an output shaft of the outer reduction gear 58a is engaged with the outer driven gear 64a. Further, the outer push-pull nut 63a is driven and rotated by the outer servo motor 57a, so that the outer ball screw 52a linearly moves in a front-and-back direction as the outer push-pull nut 63a rotates and so that the outer draw bar 70 is pushed and pulled.

The inner electric cylinder 4b is configured so as to include: an inner nut holder 56b attached to the push-pull base 83a via an inner bearing 49b; and an inner push-pull nut 63b and an inner driven gear 64b that are provided so as to be rotatable together with the inner nut holder 56b. Further, an inner ball screw 52b, which is hollow, is attached to the inner draw bar 78 via an inner bearing 50b and an inner spring 51b, so that the inner ball screw 52b does not rotate together with rotations of the inner draw bar 78.

Further, an inner reduction gear 58b and an inner servo motor 57b are attached to the push-pull base 83a, so that an inner driving gear 65b attached to an output shaft of the inner reduction gear 58b is engaged with the inner driven gear 64b. Further, the inner push-pull nut 63b is driven and rotated by the inner servo motor 57b, so that the inner ball screw 52b linearly moves in a front-and-back direction as the inner push-pull nut 63b rotates and so that the inner draw bar 78 is pushed and pulled.

### Sixth Embodiment

A holder holding device according to a sixth embodiment will be explained, without reference to any drawings. The holder holding device is configured so as to include: a holder holding mechanism; and the double push-pull mechanism 9a. The holder holding mechanism is obtained by attaching a holding base in place of the shaft 90 of the spindle according to the first embodiment. Because the holding base does not need to rotate, the length is shortened, while no bearing or the like is provided therewith, so that the holding base is fixed in a non-rotating state.

The following configurations are the same as those according to the first embodiment: the holding base has a hollow space that penetrates therethrough; the outer sleeve 16 having the tapered outer surface 16a, the outer spring 17a, and the plurality of outer key members 94a are attached to the outer circumference of the tip end on the front side; the inner sleeve 18 having the tapered inner surface 18a, the inner spring 17b, and the plurality of inner key members 94b are attached to the hollow space positioned near the tip end on the front side of the holding base; and the outer large-diameter part and the outer small-diameter part are provided on the rear side of the tapered bore formed by the tapered inner surface 18a, while the sloped part is provided between the outer large-diameter part and the outer small-diameter part so as to achieve a smooth transition of the shape.

Further, an outer draw bar having the outer balls 92a and an inner draw bar having the inner balls 92b are inserted into the hollow space in the storing base. The configurations of the outer draw bar and the inner draw bar are the same as those of the outer draw bar 85 and the inner draw bar 84, except that the lengths thereof are shortened so as to fit the storing base.

The following configurations are also the same as those according to the first embodiment: an outer gripping mechanism is formed by the outer large-diameter part, the outer small-diameter part, the outer draw bar, and the outer balls 92a; the state in which the outer balls 92a are positioned inside the outer large-diameter part is defined as an open state; and the state in which the outer balls 92a are positioned inside the outer small-diameter part is defined as a grasped state.

The following configurations are also the same as those according to the first embodiment: an inner gripping mechanism is formed by the inner large-diameter part, the inner small-diameter part, the inner draw bar, and the inner balls 92b; the state in which the inner balls 92a are positioned inside the inner large-diameter part is defined as an open state; and the state in which the inner balls 92b are positioned inside the inner small-diameter part is defined as a grasped state.

The holder holding device is obtained by attaching the double push-pull mechanism 9a to the holder holding mechanism. The configuration in which the outer draw bar is pushed and pulled by the outer cylinder 82, whereas the inner draw bar is pushed and pulled by the inner cylinder 81 is the same as the configuration according to the first embodiment.

### Seventh Embodiment

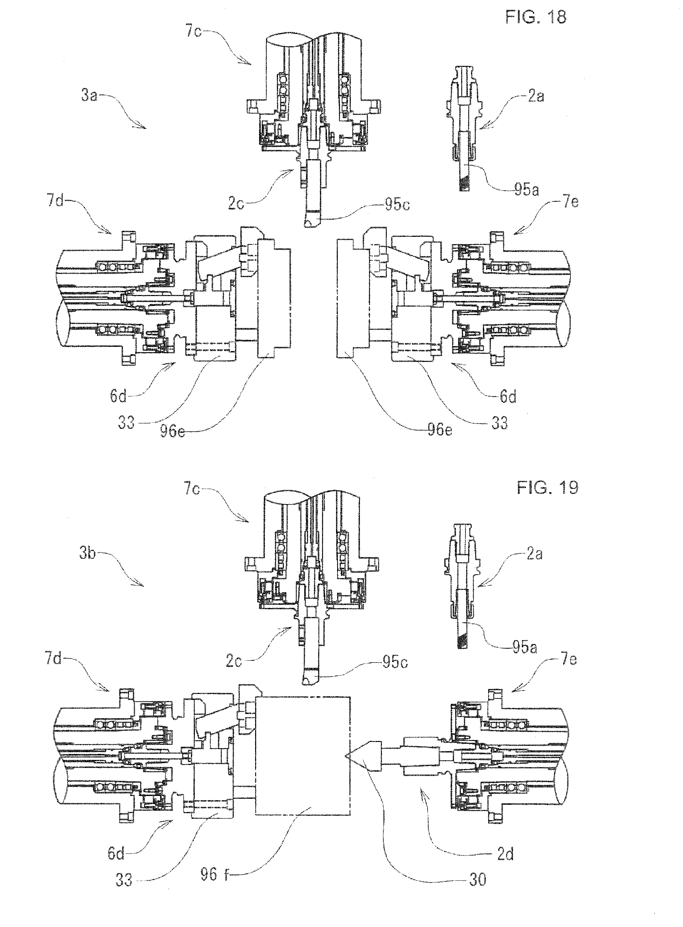

Sets of main-spindles according to a seventh embodiment will be explained with reference to FIGs. 18 and 19. Each of sets 3a and 3b of main-spindles according to the seventh embodiment is made up of the main-spindles 7a according to the first embodiment.
A first main-spindle 7c includes an X-axis moving mechanism, a Y-axis moving mechanism, and a Z-axis moving mechanism so that numerical control is exercised over the movements along the three axes. A second main-spindle 7d includes only a shaft-center -direction moving mechanism, and numerical control is exercised over the movements. Further, a third main-spindle 7e includes no moving mechanism. The second main-spindle 7d and the third main-spindle 7e share the same shaft center.

With a machine tool including the set 3a/3b made up of the main-spindles, for example, by attaching the tool holder 2a holding the end mill 95a or the tool holder 2c holding the cutting tool 95c to the first main-spindle 7c, it is possible to perform the processing while moving the first main-spindle 7c along the three axes of the X-, the Y-, and the Z-axes.

Further, by using the set 3a (FIG. 18) made up of the main-spindles in which the chuck holders 6d each holding the chuck 33 are attached to the second main-spindle 7d and to the third main-spindle 7e, it is possible to process the surface of a workpiece 96e positioned on the third main-spindle 7e side, while grasping the workpiece 96e with the chuck 33 attached to the second main-spindle 7d. After that, the second main-spindle 7d is moved closer to the third main-spindle 7e, so as to transfer the workpiece 96e from the chuck 33 attached to the second main-spindle to the chuck 33 attached to the third main-spindle 7e. Further, the surface of the workpiece 96e positioned on the second main-spindle 7d side is processed while grasping the workpiece 96e with the chuck 33 attached to the third main-spindle 7e. By performing the processing in this manner, it is possible to process all the surfaces of the workpiece 96e.

As another example, by using the set 3b (FIG. 19) made up of the main-spindles in which the chuck holder 6d holding the chuck 33 is attached to the second main-spindle 7d, whereas a center holder 2d holding a center 30 is attached to the third main-spindle 7e, it is possible to process a workpiece 96f grasped by the chuck 33 while centering the workpiece 96f with the center 30. The center holder 2d is obtained by attaching the center 30, in place of the cutting tool 95c, to the tool holder 2c.

In the seventh embodiment, the third main-spindle is configured so as to include no moving mechanism; however, the third main-spindle may also be configured so as to include a shaft-center-direction moving mechanism. Further, another configuration is also acceptable in which each of the second and the third main-spindles is moved in a direction perpendicular to the shaft-center direction. That is because it is possible to enlarge the processing range for workpieces by moving the second and the third main-spindles, in addition to the moving strokes of the first main-spindle. That is also because it becomes possible to choose from a larger selection of processing methods.
Further, by attaching the holder holding device described in the sixth embodiment in place of the third main-spindle, it is possible to obtain a set made up of the main-spindles and the holder holding device.

### Eighth Embodiment

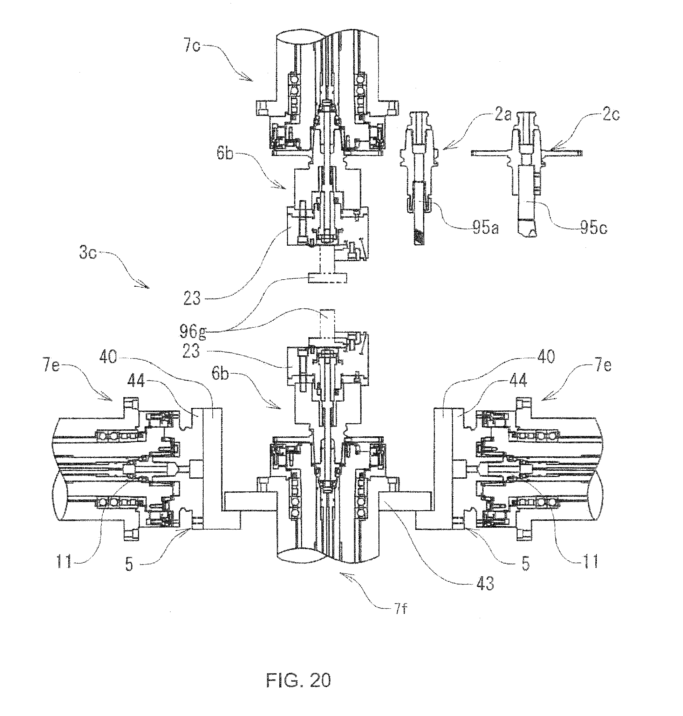

A set made up of the main-spindles and a swinging mechanism according to an eighth embodiment will be explained with reference to FIG. 20. A set 3c of the main-spindles and the swinging mechanism according to the eighth embodiment includes the main-spind.les 7a according to the first embodiment.
The first main-spindle 7c includes an X-axis moving mechanism, a Y-axis moving mechanism, and a Z-axis moving mechanism so that numerical control is exercised over the movements along the three axes. The second main-spindle 7e, the third main-spindle 7e, and a fourth main-spindle 7f each include no moving mechanism. The second main-spindle 7e and the third main-spindle 7e share the same shaft center.

A different one of swinging holders 5 each including a holder base 44 and the outer pull stud 11 is attached to the second main-spindle 7e and to the third main-spindle 7e. An L-slzaped bracket 40 is attached to each of the holder bases 44. A swinging base 43 is attached so as to be provided between the L-shaped bracket 40 attached to the second main-spindle 7e and the L-shaped bracket 40 attached to the third main-spindle 7e. As a result, the swinging mechanism is obtained in which the swinging base 43 swings while using the shaft centers of the second main-spindle 7e and the third main-spindle 7e as the center. The fourth main-spindle 7f is attached to the swinging base 43 so as to oppose the first main-spindle 7c.

With a machine tool including the set 3c made up of the main-spindles and the swinging mechanism, by attaching the chuck holders 6b each holding the chuck 23 to the first main-spindle 7c and to the fourth main-spindle 7f, it is possible to use the first main-spindle for the purpose of transferring a workpiece 96g. For example, it is possible to carry the workpiece 96g to the fourth main-spindle 7f by grasping the workpiece 96g with the chuck 23 attached to the first main-spindle 7c and to further transfer the workpiece 96g from the chuck 23 attached to the first main-spindle 7c to the chuck 23 attached to the fourth main-spindle 7f

After that, for example, by attaching the tool holder 2a holding the end mill 95a or the tool holder 2c holding the cutting tool 95c to the first main-spindle 7c, it is possible to process the workpiece 96g by moving the first main-spindle 7c along the three axes of the X-, the Y-, and the Z-axes.

With a machine tool including the set 3c made up of the main-spindles and the swinging mechanism, it is possible to perform the processing while determining the positions by setting the angle between the shaft center of the fourth main-spindle 7f and the shaft center of the first main-spindle 7c to an arbitrary value. It is also possible to perform the processing while changing the angle between the shaft center of the fourth main-spindle 7f and the shaft center of the first main-spindle 7c.

In the eighth embodiment, the second main-spindle and the third main-spindle are configured so as to include no moving mechanism; however, another configuration is acceptable in which the second and the third main-spindles each include a moving mechanism that makes a movement in the shaft-center direction or in a direction perpendicular to the shaft-center direction. That is because it is possible to enlarge the processing range for the workpiece grasped by the fourth main-spindle, by moving the swinging mechanism in addition to the moving strokes of the first main-spindle. That is also because it becomes possible to choose from a larger selection of processing methods.

### Ninth Embodiment

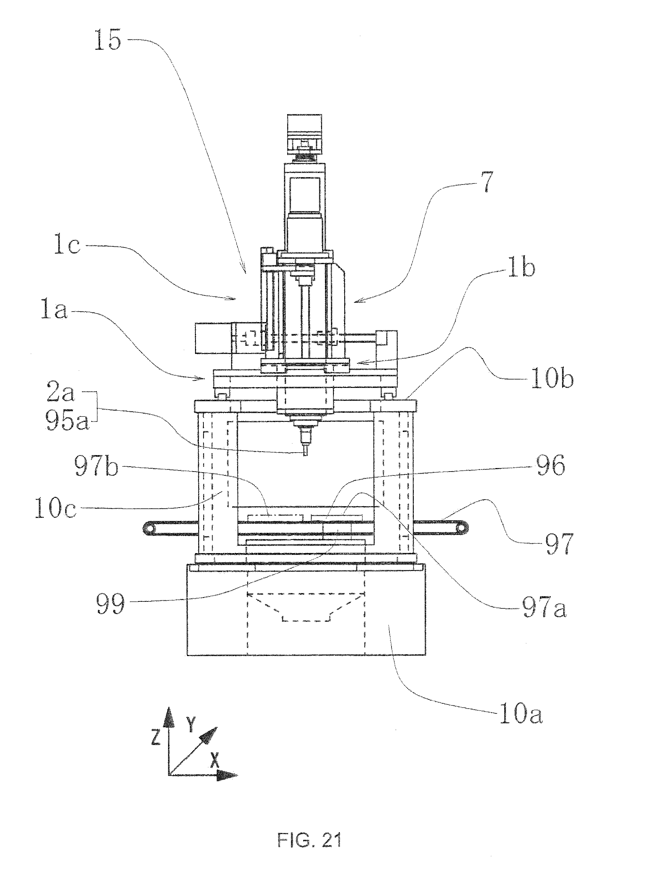

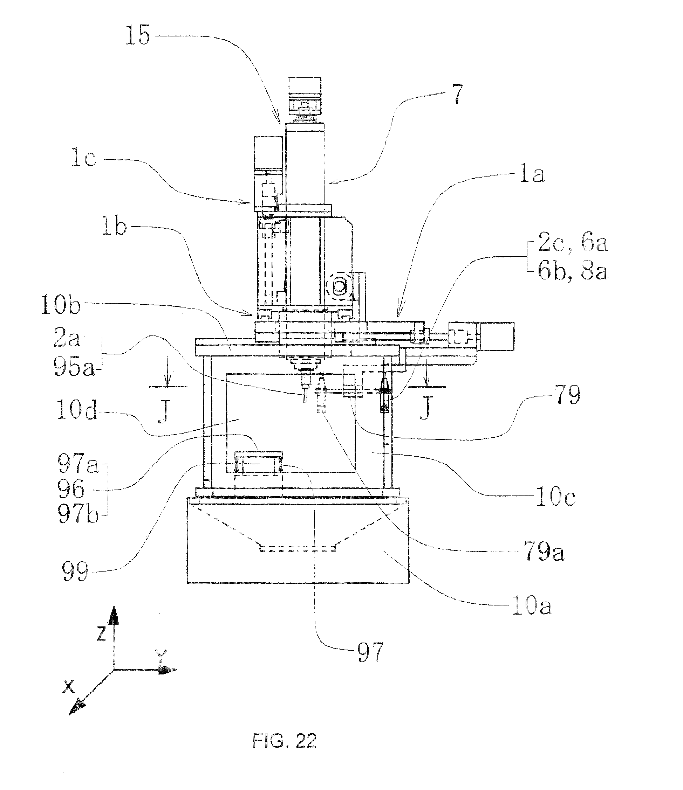

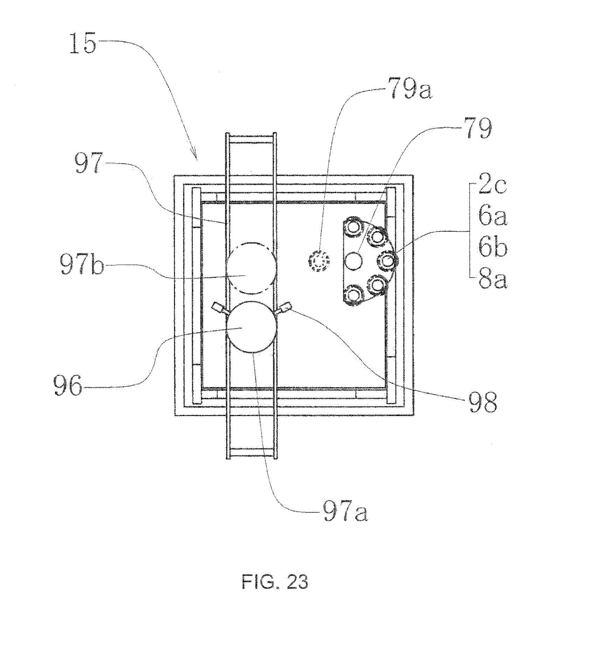

A machining center according to a ninth embodiment will be explained with reference to FIGs. 21 to 23. The machining center 15 according to the ninth embodiment includes the main-spindle 7 according to the first embodiment.
The machining center 15 includes a bed 10a, a ceiling plate 10b, and supporting walls 10c. The Y-axis moving mechanism 1a is attached to the ceiling plate 10b. The X-axis moving mechanism 1b is attached to the Y-axis moving mechanism 1a. Further, the Z-axis moving mechanism 1c is attached to the X-axis moving mechanism 1b.

As described in paragraph [0132] (up to the line just before paragraph [0133]), the Z-axis moving mechanism 1c is provided with the rear static pressure guide 53 and the front static pressure guide 54 to which lubricant oil is supplied. While a large part of the circumference of the main-spindle tube 71 is guided, the Z ball screw 62 is rotated by the Z servo motor 61. The main-spindle 7 is raised and lowered together with the main-spindle, tube 71 connected to the Z nut 62a.

Further, by providing a magazine 79 and inserting a receiving part into each of the small grooves 12b, 26b, 21b, 25b, and 41b that are used in common, it is possible to store a plurality of holders such as the tool holders 2a and 2c, the chuck holders 6a and 6b, the clamp holder 8a, and the like. Further, by configuring openings 10d so as to penetrate through the supporting walls 10c, a conveyer 97 is provided in such a manner that two rows of chains in both directions pass over the bed 10a. Also, a stopper 98 and a holding device 99 for a workpiece 96 are attached onto the path of the conveyer 97. Further, the position in which the workpiece 96 is stopped by the stopper 98 is referred to as an A station 97a. Also, a B station 97b is provided in a position ahead (in terms of the conveying direction) of the A station 97a.

Further, in the case where the chuck holder 6a/6b or the clamp holder 8a is attached to the main-spindle 7, a cutting tool or a rotating tool is attached to a processing space represented by the range in which the workpiece grasped by the chuck holder 6a/6b or the clamp holder 8a can move.

The workpiece 96 travels on the conveyer 97 and is stopped at the A station 97a by the stopper 98. Subsequently, by holding the workpiece 96 with the holding device 99 and moving the main-spindle unit 7 in the directions of the X-, the Y-, and the Z- axes while rotating a tool such as the end mill 95a attached to the main-spindle unit 7, it is possible to perform the processing on the workpiece 96 while applying a forwarding movement and a cutting movement to the tool.

Further, when another tool is to be used in the processing, by moving the main-spindle unit 7 and putting the tool holder 2a, which has so far been used, into an empty storage in the magazine 79 at a tool exchange position 79a, and further attaching another tool holder 2c, which has been stored in the magazine 79, to the main-spindle unit 7, it is possible to perform the processing using said another tool such as the cutting tool 95c.

Because the magazine 79 stores many different types of tool holders therein, it is possible to perform the processing using many different types of tools. When the processing is completed by having the workpiece 96 held by the holding device 99, the completed workpiece 96 is carried away by the conveyer 97.

Further, if it is necessary to perform more processing using other processing steps, by attaching the chuck holder 6a/6b or the clamp holder 8a to the main-spindle unit 7 and grasping the workpiece 96 with the chuck holder 6a/6b or the clamp holder 8a, it is possible to perform the processing on the workpiece 96 while applying a forwarding movement and a cutting movement to a cutting tool or a rotating tool provided in the processing space.

In that situation, it is possible to perform various forms of processing steps in an efficient manner, e.g., a processing step of placing an already-processed workpiece 96 at the B station 97b, and simultaneously carrying in another workpiece 96 to be subsequently processed and carrying away the already-processed workpiece 96, or a processing step of carrying the workpiece 96 to be subsequently processed into the A station 97a in advance.

Further, by providing a magazine having a receiving part that fits the large grooves 20b, 31b, 34b, and 67b that are used in common, it is possible to store the tool holder 2b, the chuck holders 6c and 6d, and the clamp holder 8b therein and to perform the processing by attaching any of these holders to the main-spindle 7. Furthermore, it is also possible to provide both the magazine for the small grooves and the magazine for the large grooves or to provide a magazine that can be used for both the small grooves and the large grooves.

### INDUSTRIAL APPLICABILITY

The present invention can be used not only in industries that manufacture and sell machine tools and industries that manufacture machined products, but also in industries that manufacture and sell tools, chucks, clamp mechanisms, and spindles and industries that engineer machining plants.

### REFERENCE SIGNS LIST

1a: Y-axis moving mechanism; 1b: X-axis moving mechanism; 1c: Z-axis moving mechanism; 2a: tool holder; 2b: tool holder; 2c: tool holder; 2d: center holder; 3a: set of main- spindles; 3b: set of main-spindles; 3c: set made up of main-spindles and swinging mechanism; 4a: outer electric cylinder; 4b: inner electric cylinder; 5: swinging holder; 6a: chuck holder; 6b: chuck holder; 6c: chuck holder; 6d: chuck holder; 7: main-spindle unit

7a: main-spindle; 7b: main-spindle; 7c: main-spindle; 7d: main-spindle; 7e: main- spindle; 7f: main-spindle; 8a: clamp holder; 8b: clamp holder; 9a: double push-pull mechanism; 9b: double push-pull mechanism; 10a: bed; 10b: ceiling plate; 10c: supporting wall; 10d: opening; 11: outer pull stud; 11 a: outer head; 11b: outer neck; 11c: chamfered part; 11d: sloped part; 11e: hole; 12: holder base; 12a: tapered outer surface

12b: small groove; 12c: tool hole; 12d: front abutted surface; 12e: key groove; 13: nut; 14: insert; 15: machining center; 16: outer sleeve; 16a: tapered outer surface; 17a: outer spring; 17b: inner spring; 18: inner sleeve; 18a: tapered inner surface; 19: lock mechanism; 20: holder base; 20a: tapered inner surface; 20b: large groove; 20c: attachment surface; 20d: rear abutted surface; 20e: key groove

21: holder base; 21a: tapered outer surface; 21b: small groove; 21c: attachment surface; 21 d: front abutted surface; 21e: key groove; 22: inner pull stud; 22a: inner head; 22b: inner neck; 22c: chamfered part; 22d: sloped part; 22e: center dividing line; 23: chuck; 23a: claw; 23b: jaw slide; 24: spring; 25: holder base; 25a: tapered outer surface; 25b: small groove; 25c: position determining hole

25d: flange; 25e: attachment surface; 25f: front abutted surface; 25g: key groove; 26: holder base; 26a: tapered outer surface; 26b: small groove; 26c: position detern1ining hole; 26d: flange; 26e: attachment hole; 26f: front abutted surface; 26g: key groove; 29: bearing; 30: center; 31: holder base; 31a: tapered inner surface; 31b: large groove; 31c: attachment surface; 31d: rear abutted surface; 31e: key groove

32: inner pull stud; 32a: inner head; 32b: inner neck; 32c: chamfered part; 32d: sloped part; 33: chuck; 33a: claw; 33b: jaw slide; 34: holder base; 34a: tapered inner surface; 34b: large groove; 34c: position determining hole; 34d: flange; 34e: attachment surface; 34f: rear abutted surface; 34g: key groove; 35a: clamp mechanism; 35b: clamp mechanism; 36a: clamp base

36b: clamp base; 37a: slide; 37b: slide; 38a: reversing frame; 38b: reversing frame; 39a: moving block; 39b: moving block; 40: L-shaped bracket; 41: holder base; 41a: tapered outer surface; 41b: small groove; 41c: position determining hole; 41d: flange; 41e: attachment surface; 41f front abutted surface; 41g: key groove; 42: inner pull stud; 42a: inner head

42b: inner neck; 42c: chamfered part; 42d: sloped part; 43: swinging base; 44: holder base; 45: clamp arm; 45a: clamp surface; 46a: position determining pin; 46b: position determining pin; 47: clamp arm; 47a: clamp surface; 49a: outer bearing; 49b: inner bearing; 50a: outer bearing; 50b: inner bearing; 51a: outer spring; 51b: inner spring; 52a: outer ball screw; 52b: inner ball screw

53: rear static pressure guide; 54: front static pressure guide; 55: inner pull stud; 55a: inner head; 55b: inner neck; 55c: chamfered part; 55d: sloped part; 56a: outer nut holder; 56b: inner nut holder; 57a: outer servo motor; 57b: inner servo motor; 58a: outer reduction gear; 58b: inner reduction gear; 60: lock pin; 60a: piston; 61: Z servo motor; 62: Z ball screw; 62a: Z nut

63a: outer push-pull nut; 63b: inner push-pull nut; 64a: outer driven gear; 64b: inner driven gear; 65a: outer driving gear; 65b: inner driving gear; 66: lock cylinder; 66a: A port; 66b: B port; 67: holder base; 67a: tapered inner surface; 67b: large groove; 67c: position determining hole; 67d: flange; 67e: attachment surface; 67f: rear abutted surface; 67g: key groove; 68: holder base; 68a: tapered outer surface

68b: small groove; 68c: recess; 68d: front abutted surface; 68e: substantially circular cylindrical part; 68f: grasped groove; 68g: rear sloped surface; 69: fixed guide; 69a: tube part; 69b: guide hole; 69c: flange; 69d: projection; 70: outer draw bar; 70a: front sloped surface; 70b: ball hole; 70c: inner large-diameter part; 70d: inner small-diameter part; 70e: sloped surface; 71: main-spindle tube; 71a: operation hole; 72: built-in motor; 72a: bearing

72b: bearing; 73: connecting shaft A; 74: connecting shaft B; 75: mecha-lock; 76: connecting ring; 77: nut; 78: inner draw bar; 78a: inner head space; 78b: ball hole; 78c: center bore; 79: magazine; 79a: exchange position; 80: shaft; 80a: front abutting surface; 81: inner cylinder; 81a: inner piston; 81b: A port; 81 c: B port; 81d: inner rod; 82: outer cylinder

82a: outer piston; 82b: A port; 82c: B port; 82d: outer rod; 83a: push-pull base; 83b: stopper; 84: inner draw bar; 84a: inner head space; 84b: ball hole; 84c: center bore; 85: outer draw bar; 85a: outer head space; 85b: inner large-diameter part; 85c: inner small-diameter part; 85d: ball hole; 85f: sloped surface; 86: inner draw bar; 86a: inner head space; 86b: ball hole

86c: center bore; 87: rotary joint; 88: cylinder base; 89: rotation detecting unit; 90: shaft; 90a: front abutting surface; 90b: rear abutting surface; 90e: outer large-diameter part; 90f: sloped part; 90g: outer small-diameter part; 90h: tapered bore; 91: spindle; 92a: outer ball; 92b: inner ball; 93: spindle case; 93a: bearing; 93b: bearing; 93c: front cover; 94a: outer key member; 94b: inner key member

95a: end mill; 95b: milling cutter; 95c: cutting tool; 96: workpiece; 96a: workpiece; 96b: workpiece; 96c: workpiece; 96d: workpiece; 96e: workpiece; 96f workpiece; 96g: workpiece; 97: conveyer; 97a: A station; 97b: B station; 98: stopper; 99: holding device

## Claims

1. A double grasping mechanism wherein
a double grasped part is formed by an outer grasped part and an inner grasped part, while a double gripping mechanism is formed by an outer gripping mechanism including outer balls and an outer draw bar and an inner gripping mechanism including inner balls and an inner draw bar, and further, the double grasping mechanism is formed by an outer grasping mechanism including the outer grasped part and the outer gripping mechanism and an inner grasping mechanism including the inner grasped part and the inner gripping mechanism, while the inner gripping mechanism is configured so as to grasp the inner grasped part within the outer draw bar,
while a side on which a tool, a chuck, a clamp mechanism, or the like is attached to the outer gripping mechanism is defined as a front side, a portion of the outer draw bar near an end thereof on the front side is formed as a circular cylindrical part that has a plurality of ball holes therein so that the outer balls are provided while being held so as to be movable in a normal line direction, whereas a portion of the inner draw bar near an end thereof on the front side is formed as a circular cylindrical part that has a plurality of ball holes therein so that the inner balls are provided while being held so as to be movable in a normal line direction, and
while the outer gripping mechanism and the inner gripping mechanism are each in an open state, the outer grasped part is inserted into the outer gripping mechanism, whereas the inner grasped part is inserted into the inner gripping mechanism, and upon moving the outer draw bar toward a rear side, the outer balls move toward the outer grasped part so as to achieve a grasped state in which the outer grasped part is grasped by the outer gripping mechanism, and further, upon moving the inner draw bar toward the rear side, the inner balls move toward the inner grasped part so as to achieve a grasped state in which the inner grasped part is grasped by the inner gripping mechanism.

2. The double grasping mechanism according to claim 1, wherein
the outer grasped part is configured with an outer pull stud including an outer head and an outer neck, whereas the inner grasped part is configured with an inner pull stud including an inner head and an inner neck, while the outer gripping mechanism includes an outer large-diameter part, an outer small-diameter part, the outer draw bar, and the outer balls, whereas the inner gripping mechanism includes an inner large-diameter part and an inner small-diameter part provided in the outer draw bar, the inner draw bar, and the inner balls,
when the outer balls are positioned inside the outer large-diameter part so that the outer gripping mechanism is in the open state, upon inserting the outer pull stud into the outer gripping mechanism, the outer head pushes the outer balls outwardly in the normal line direction, so that the outer head enlarges a gap between the outer balls so as to go through the gap and go into an outer head space, and subsequently, when the outer draw bar is moved rearward, the outer balls move so as to be positioned inside the outer small-diameter part, so that the outer balls move inwardly in the normal line direction so as to grip the outer head and so as to achieve the grasped state in which the outer pull stud is grasped by the outer gripping mechanism, and
when the inner balls are positioned inside the inner large-diameter part, so that the inner gripping mechanism is in the open state, upon inserting the inner pull stud into the inner gripping mechanism, the inner head pushes the inner balls outwardly in the normal line direction, so that the inner head enlarges a gap between the inner balls so as to go through the gap and go into an inner head space, and subsequently, when the inner draw bar is moved rearward, the inner balls move so as to be positioned inside the inner small-diameter part, so that the inner balls move inwardly in the normal line direction so as to grip the inner head and so as to achieve the grasped state in which the inner pull stud is grasped by the inner gripping mechanism.

3. The double grasping mechanism according to claim 1, wherein
the outer grasped part is formed as a substantially circular cylindrical part having a grasped groove formed on an inner surface thereof, while a rear sloped surface is provided on a rear side of the grasped groove, whereas the inner grasped part is configured with an inner pull stud including an inner head and an inner neck,
the outer gripping mechanism is configured so as to include: a fixed guide having a plurality of guide holes therein; and the outer draw bar and the outer balls provided inside the fixed guide, while each of the outer balls is disposed so as to be stored in both one of the ball holes provided in the outer draw bar and one of the guide holes at a same time,
in the outer draw bar, a front sloped surface is provided on a front and outer side of the ball holes, while an inner large-diameter part is provided on a rear and inner side of the ball holes, and further, an inner small-diameter part is provided on a rear side of the inner large-diameter part, while the inner gripping mechanism is configured so as to include: the inner large-diameter part, the inner small-diameter part, the inner draw bar, and the inner balls,
a state in which the ball holes provided in the outer draw bar substantially match the guide holes is defined as an open state, and when the substantially circular cylindrical part is inserted in an outer circumference of the fixed guide while being in the open state, each of the outer balls is stored in both one of the ball holes provided in the outer draw bar and one of the guide holes so as not to prevent the substantially circular cylindrical part from being inserted,
when the outer draw bar is moved rearward after the insertion of the substantially circular cylindrical part, the outer balls move outwardly in the normal line direction by being pushed by the front sloped surface, so that the outer balls push the rear sloped surface of the grasped groove rearward and so that the outer balls pushed by the front sloped surface grip the rear sloped surface while pushing the rear sloped surface, so as to achieve the grasped state in which the substantially circular cylindrical part is grasped by the outer gripping mechanism, and
when the inner balls are positioned inside the inner large-diameter part, so that the inner gripping mechanism is in the open state, upon inserting the inner pull stud into the inner gripping mechanism, the inner head pushes the inner balls outwardly in the normal line direction, so that the inner head enlarges a gap between the inner balls so as to go through the gap and go into an inner head space, and subsequently, when the inner draw bar is moved rearward, the inner balls move so as to be positioned inside the inner small-diameter part, so that the inner balls move inwardly in the normal line direction so as to grip the inner head and so as to achieve the grasped state in which the inner pull stud is grasped by the inner gripping mechanism.

4. A double draw bar structure including an outer draw bar and an inner draw bar, wherein
a portion of the outer draw bar near an end thereof on a front side is formed as a circular cylindrical part, while the circular cylindrical part has a plurality of ball holes therein, and an outer head space is provided on a rear side of the plurality of ball holes, while an inner large-diameter part is provided on a rear side of the outer head space, and further, an inner small-diameter part is provided on a rear side of the inner large-diameter part, and
a portion of the inner draw bar near an end thereof on the front side is formed as a circular cylindrical part, while the circular cylindrical part has a plurality of ball holes therein, and an inner head space is provided on a rear side of the plurality of ball holes, and upon inserting the inner draw bar into the outer draw bar, the ball holes provided in the inner draw bar are configured so as to be movable from an inside of the inner large-diameter part to an inside of the inner small-diameter part.

5. The double draw bar structure according to claim 4, wherein the ball holes provided in the inner draw bar are oblong.

6. A double draw bar structure comprising: an outer draw bar and an inner draw bar, wherein
a portion of the outer draw bar near an end thereof on a front side is formed as a circular cylindrical part, while the circular cylindrical part has a plurality of ball holes therein,
in the outer draw bar, a front sloped surface is provided on a front and outer side of each of the plurality of ball holes, while an inner large-diameter part is provided on a rear and inner side of the ball holes, and further, an inner small-diameter part is provided on a rear side of the inner large-diameter part, and
a portion of the inner draw bar near an end thereof on the front side is formed as a circular cylindrical part, while the circular cylindrical part has a plurality of ball holes therein, and an inner head space is provided on a rear side of the plurality of ball holes, and upon inserting the inner draw bar into the outer draw bar, the ball holes provided in the inner draw bar are configured so as to be movable from an inside of the inner large-diameter part to an inside of the inner small-diameter part.

7. A spindle comprising: a spindle case, a bearing attached to the spindle case, a shaft rotatably held by the bearing, and an outer draw bar and an inner draw bar inserted in a bore in the shaft, wherein
the bore in the shaft is provided with an outer large-diameter part and an outer small-diameter part,
a portion of the outer draw bar near an end thereof on a front side is formed as a circular cylindrical part, while the circular cylindrical part has a plurality of ball holes therein so that outer balls are provided while being held so as to be movable in a normal line direction, and an outer head space is provided on a rear side of the outer balls, while an inner large-diameter part is provided on a rear side of the outer head space, whereas an inner small-diameter part is provided on a rear side of the inner large-diameter part,
a portion of the inner draw bar near an end thereof on the front side is formed as a circular cylindrical part, while the circular cylindrical part has a plurality of ball holes therein so that inner balls are provided while being held so as to be movable in a normal line direction, and an inner head space is provided on a rear side of the inner balls, whereas the inner draw bar is inserted into the outer draw bar, and
a double gripping mechanism is formed by an outer gripping mechanism and an inner gripping mechanism, the outer gripping mechanism including the outer large-diameter part, the outer small-diameter part, the outer draw bar, and the outer balls, and the inner gripping mechanism including the inner large-diameter part, the inner small-diameter part, the inner draw bar, and the inner balls.

8. A spindle comprising; a spindle case, a bearing attached to the spindle case, a shaft rotatably held by the bearing, and an outer draw bar and an inner draw bar inserted in a bore in the shaft, wherein
a fixed guide having a plurality of guide holes therein is provided in the bore in the shaft, and a portion of the outer draw bar near an end thereof on a front side is formed as a circular cylindrical part, while the circular cylindrical part has a plurality of ball holes therein, and further, each of the outer balls is disposed so as to be stored in both one of the ball holes provided in the outer draw bar and one of the guide holes at a same time, and the outer balls are held so as to be movable in a normal line direction,
in the outer draw bar, a front sloped surface is provided on a front and outer side of each of the plurality of ball holes, while an inner large-diameter part is provided on a rear and inner side of the ball holes, and further, an inner small-diameter part is provided on a rear side of the inner large-diameter part,
a portion of the inner draw bar near an end thereof on the front side is formed as a circular cylindrical part, while the circular cylindrical part has a plurality of ball holes therein so that inner balls are provided while being held so as to be movable in a normal line direction, and an inner head space is provided on a rear side of the inner balls, whereas the inner draw bar is inserted into the outer draw bar, and
a double gripping mechanism is formed by an outer gripping mechanism and an inner gripping mechanism, the outer gripping mechanism including the fixed guide, the outer draw bar, and the outer balls, and the inner gripping mechanism including the inner large-diameter part, the inner small-diameter part, the inner draw bar, and the inner balls.

9. A holder holding mechanism comprising: a holding base; and an outer draw bar and an inner draw bar inserted in a bore in the holding base, wherein
the bore in the holding base is provided with an outer large-diameter and an outer small-diameter part,
a portion of the outer draw bar near an end thereof on a front side is formed as a circular cylindrical part, while the circular cylindrical part has a plurality of ball holes therein so that outer balls are provided while being held so as to be movable in a normal line direction, and an outer head space is provided on a rear side of the outer balls, while an inner large-diameter part is provided on a rear side of the outer head space, whereas an inner small-diameter part is provided on a rear side of the inner large-diameter part,
a portion of the inner draw bar near an end thereof on the front side is formed as a circular cylindrical part, while the circular cylindrical part has a plurality of ball holes therein so that inner balls are provided while being held so as to be movable in a normal line direction, and an inner head space is provided on a rear side of the inner balls, whereas the inner draw bar is inserted into the outer draw bar, and
a double gripping mechanism is formed by an outer gripping mechanism and an inner gripping mechanism, the outer gripping mechanism including the outer large-diameter part, the outer small-diameter part, the outer draw bar, and the outer balls, and the inner gripping mechanism including the inner large-diameter part, the inner small-diameter part, the inner draw bar, and the inner balls.

10. A holder holding mechanism comprising: a holding base; and an outer draw bar and an inner draw bar inserted in a bore in the holding base, wherein
a fixed guide having a plurality of guide holes therein is provided in the bore in the holding base, and a portion of the outer draw bar near an end thereof on a front side is formed as a circular cylindrical part, while the circular cylindrical part has a plurality of ball holes therein, and further, each of the outer balls is disposed so as to be stored in both one of the ball holes provided in the outer draw bar and one of the guide holes at a same time, and the outer balls are held so as to be movable in a normal line direction,
in the outer draw bar, a front sloped surface is provided on a front and outer side of each of the plurality of ball holes, while an inner large-diameter part is provided on a rear and inner side of the ball holes, and further, an inner small-diameter part is provided on a rear side of the inner large-diameter part,
a portion of the inner draw bar near an end thereof on the front side is formed as a circular cylindrical part, while the circular cylindrical part has a plurality of ball holes therein so that inner balls are provided while being held so as to be movable in a normal line direction, and an inner head space is provided on a rear side of the inner balls, whereas the inner draw bar is inserted into the outer draw bar, and
a double gripping mechanism is formed by an outer gripping mechanism and an inner gripping mechanism, the outer gripping mechanism including the fixed guide, the outer draw bar, and the outer balls, and the inner gripping mechanism including the inner large-diameter part, the inner small-diameter part, the inner draw bar, and the inner balls.

11. The spindle according to claim 7 or 8, wherein
an inner sleeve having a tapered inner surface is attached to a position near an end on a front side of the bore in the shaft of the spindle, and a spring is further attached to a rear side of the inner sleeve, so that a vicinity of an end of the shaft is formed as a tapered bore by the tapered inner surface of the inner sleeve.

12. The holder holding mechanism according to claim 9 or 10, wherein
an inner sleeve having a tapered inner surface is attached to a position near an end on a front side of the bore in the holding base, and a spring is further attached to a rear side of the inner sleeve, so that a vicinity of an end of the holding base is formed as a tapered bore by the tapered inner surface of the inner sleeve.

13. A spindle in which a tapered outer surface is provided on an outer circumference of a tip end of a shaft of the spindle, wherein
the spindle is one of the following spindles:
the spindle according to claim 7 or 8; and
the spindle according to claim 7 or 8, wherein an inner sleeve having a tapered inner surface is attached to a position near an end on a front side of the bore in the shaft of the spindle, and a spring is further attached to a rear side of the inner sleeve, so that a vicinity of an end of the shaft is formed as a tapered bore by the tapered inner surface of the inner sleeve.

14. A holder holding mechanism in which a tapered outer surface is provided on an outer circumference of a tip end of a holding base of the holder holding mechanism, wherein
the holder holding mechanism is one of the following holder holding mechanisms:
the holder holding mechanism according to claim 9 or 10; and
the holder holding mechanism according to claim 9 or 10, wherein an inner sleeve having a tapered inner surface is attached to a position near an end on a front side of the bore in the holding base, and a spring is further attached to a rear side of the inner sleeve, so that a vicinity of an end of the holding base is formed as a tapered bore by the tapered inner surface of the inner sleeve.

15. A spindle in which an outer sleeve having a tapered outer surface is attached to an outer circumference near an end on a front side of the shaft of the spindle, and a spring is further attached to a rear side of the outer sleeve, wherein
the spindle is one of the following spindles:
the spindle according to claim 7 or 8; and
the spindle according to claim 7 or 8, wherein an inner sleeve having a tapered inner surface is attached to a position near an end on a front side of the bore in the shaft of the spindle, and a spring is further attached to a rear side of the inner sleeve, so that a vicinity of an end of the shaft is formed as a tapered bore by the tapered inner surface of the inner sleeve.

16. A holder holding mechanism in which an outer sleeve having a tapered outer surface is attached to an outer circumference near an end on a front side of a holding base, and a spring is further attached to a rear side of the outer sleeve, wherein
the holder holding mechanism is one of the following holder holding mechanisms:
the holder holding mechanism according to claim 9 or 10; and
the holder holding mechanism according to claim 9 or 10, wherein an inner sleeve having a tapered inner surface is attached to a position near an end on a front side of the bore in the holding base, and a spring is further attached to a rear side of the inner sleeve, so that a vicinity of an end of the holding base is formed as a tapered bore by the tapered inner surface of the inner sleeve.

17. A main-spindle comprising: a spindle; a main-spindle tube to which the spindle is attached; a motor that drives and rotates a shaft of the spindle; and a double push-pull mechanism including an outer push-pull mechanism and an inner push-pull mechanism that respectively push and pull an outer draw bar and an inner draw bar in the spindle, wherein
the spindle is one of the following spindles:
the spindle according to claim 7;
the spindle according to claim 7, wherein an inner sleeve having a tapered inner surface is attached to a position near an end on a front side of the bore in the shaft of the spindle, and a spring is further attached to a rear side of the inner sleeve, so that a vicinity of an end of the shaft is formed as a tapered bore by the tapered inner surface of the inner sleeve; and
the spindle according to claim 7, wherein an outer sleeve having a tapered outer surface is attached to an outer circumference near an end on a front side of the shaft of the spindle, and a spring is further attached to a rear side of the outer sleeve, and
when the outer draw bar is pushed to a front side by the outer push-pull mechanism, the outer balls provided in the outer draw bar are positioned inside the outer large-diameter part of the shaft of the spindle, so that the outer gripping mechanism is in an open state, whereas when the outer draw bar is pulled to a rear side by the outer push-pull mechanism, the outer balls are positioned inside the outer small-diameter part of the shaft of the spindle so that the outer gripping mechanism is in a grasped state, and
when the inner draw bar is pushed to the front side by the inner push-pull mechanism while the outer gripping mechanism is in an open state, the inner balls provided in the inner draw bar are positioned inside the inner large-diameter part of the outer draw bar, so that the inner gripping mechanism is in an open state, whereas when the inner draw bar is pulled to the rear side by the inner push-pull mechanism while the outer gripping mechanism is in a grasped state, the inner balls are positioned inside the inner small-diameter part of the outer draw bar, so that the inner gripping mechanism is in a grasped state.

18. A main-spindle comprising: a spindle; a main-spindle tube to which the spindle is attached; a motor that drives and rotates a shaft of the spindle; and a double push-pull mechanism including an outer push-pull mechanism and an inner push-pull mechanism that respectively push and pull an outer draw bar and an inner draw bar in the spindle, wherein
the spindle is one of the following spindles:
the spindle according to claim 8;
the spindle according to claim 8, wherein an inner sleeve having a tapered inner surface is attached to a position near an end on a front side of the bore in the shaft of the spindle, and a spring is further attached to a rear side of the inner sleeve, so that a vicinity of an end of the shaft is formed as a tapered bore by the tapered inner surface of the inner sleeve; and
the spindle according to claim 8, wherein an outer sleeve having a tapered outer surface is attached to an outer circumference near an end on a front side of the shaft of the spindle, and a spring is further attached to a rear side of the outer sleeve, and
when the outer draw bar is pushed to a front side by the outer push-pull mechanism, the ball holes provided in the outer draw bar substantially match the guide holes provided in the fixed guide, so that the outer gripping mechanism is in an open state, whereas when the outer draw bar is pulled to a rear side by the outer push-pull mechanism, the outer balls move outwardly in the normal line direction by being pushed by the front sloped surface of the outer draw bar, so that the outer gripping mechanism is in a grasped state, and
when the inner draw bar is pushed to the front side by the inner push-pull mechanism while the outer gripping mechanism is in an open state, the inner balls provided in the inner draw bar are positioned inside the inner large-diameter part of the outer draw bar, so that the inner gripping mechanism is in an open state, whereas when the inner draw bar is pulled to the rear side by the inner push-pull mechanism while the outer gripping mechanism is in a grasped state, the inner balls are positioned inside the inner small-diameter part of the outer draw bar, so that the inner gripping mechanism is in a grasped state.

19. A holder holding device comprising: a holder holding mechanism; and a double push-pull mechanism including an outer push-pull mechanism and an inner push-pull mechanism that respectively push and pull an outer draw bar and an inner draw bar in the holder holding mechanism, wherein
the holder holding mechanism is one of the following holder holding mechanisms:
the holder holding mechanism according to claim 9;
the holder holding mechanism according to claim 9, wherein an inner sleeve having a tapered inner surface is attached to a position near an end on a front side of the bore in the holding base, and a spring is further attached to a rear side of the inner sleeve, so that a vicinity of an end of the holding base is formed as a tapered bore by the tapered inner surface of the inner sleeve; and
the holder holding mechanism according to claim 9, wherein an outer sleeve having a tapered outer surface is attached to an outer circumference near an end on a front side of the holding base, and a spring is further attached to a rear side of the outer sleeve, and
when the outer draw bar is pushed to a front side by the outer push-pull mechanism, the outer balls provided in the outer draw bar are positioned inside the outer large-diameter part of the holding base, so that the outer gripping mechanism is in an open state, whereas when the outer draw bar is pulled to a rear side by the outer push-pull mechanism, the outer balls are positioned inside the outer small-diameter part of the holding base so that the outer gripping mechanism is in a grasped state, and
when the inner draw bar is pushed to the front side by the inner push-pull mechanism while the outer gripping mechanism is in an open state, the inner balls provided in the inner draw bar are positioned inside the inner large-diameter part of the outer draw bar, so that the inner gripping mechanism is in an open state, whereas when the inner draw bar is pulled to the rear side by the inner push-pull mechanism while the outer gripping mechanism is in a grasped state, the inner balls are positioned inside the inner small-diameter part of the outer draw bar, so that the inner gripping mechanism is in a grasped state.

20. A holder holding device comprising: a holder holding mechanism; and a double push-pull mechanism including an outer push-pull mechanism and an inner push-pull mechanism that respectively push and pull an outer draw bar and an inner draw bar in the holder holding mechanism, wherein
the holder holding mechanism is one of the following holder holding mechanisms:
the holder holding mechanism according to claim 10;
the holder holding mechanism according to claim 10, wherein an inner sleeve having a tapered inner surface is attached to a position near an end on a front side of the bore in the holding base, and a spring is further attached to a rear side of the inner sleeve, so that a vicinity of an end of the holding base is formed as a tapered bore by the tapered inner surface of the inner sleeve; and
the holder holding mechanism according to claim 10, wherein an outer sleeve having a tapered outer surface is attached to an outer circumference near an end on a front side of the holding base, and a spring is further attached to a rear side of the outer sleeve, and
when the outer draw bar is pushed to a front side by the outer push-pull mechanism, the ball holes provided in the outer draw bar substantially match the guide holes provided in the fixed guide, so that the outer gripping mechanism is in an open state, whereas when the outer draw bar is pulled to a rear side by the outer push-pull mechanism, the outer balls move outwardly in the normal line direction by being pushed by the front sloped surface of the outer draw bar, so that the outer gripping mechanism is in a grasped state, and
when the inner draw bar is pushed to the front side by the inner push-pull mechanism while the outer gripping mechanism is in an open state, the inner balls provided in the inner draw bar are positioned inside the inner large-diameter part of the outer draw bar, so that the inner gripping mechanism is in an open state, whereas when the inner draw bar is pulled to the rear side by the inner push-pull mechanism while the outer gripping mechanism is in a grasped state, the inner balls are positioned inside the inner small-diameter part of the outer draw bar, so that the inner gripping mechanism is in a grasped state.

21. The main-spindle according to claim 17 or 18, wherein
in the double push-pull mechanism, the outer push-pull mechanism is an outer cylinder, whereas the inner push-pull mechanism is an inner cylinder.

22. The holder holding device according to claim 19 or 20, wherein
in the double push-pull mechanism, the outer push-pull mechanism is an outer cylinder, whereas the inner push-pull mechanism is an inner cylinder.

23. The main-spindle according to claim 17 or 18, wherein
in the double push-pull mechanism, the outer push-pull mechanism is an outer electric cylinder, whereas the inner push-pull mechanism is an inner electric cylinder,
the outer electric cylinder is configured so as to include: an outer push-pull nut rotatably attached to a push-pull base via a bearing; and an outer ball screw attached to the outer draw bar via a bearing and a spring, and is configured so that the outer ball screw is caused to slide when an outer motor drives and rotates the outer push-pull nut and so that the outer draw bar is pushed and pulled by the outer ball screw, and
the inner electric cylinder is configured so as to include: an inner pusla-pull nut rotatably attached to a push-pull base via a bearing; and an inner ball screw attached to the inner draw bar via a bearing and a spring, and is configured so that the inner ball screw is caused to slide when an inner motor drives and rotates the inner push-pull nut and so that the inner draw bar is pushed and pulled by the inner ball screw.

24. The holder holding device according to claim 19 or 20, wherein
in the double push-pull mechanism, the outer push-pull mechanism is an outer electric cylinder, whereas the inner push-pull mechanism is an inner electric cylinder,
the outer electric cylinder is configured so as to include: an outer push-pull nut rotatably attached to a push-pull base via a bearing; and an outer ball screw attached to the outer draw bar via a bearing and a spring, and is configured so that the outer ball screw is caused to slide when an outer motor drives and rotates the outer push-pull nut and so that the outer draw bar is pushed and pulled by the outer ball screw, and
the inner electric cylinder is configured so as to include: an inner push-pull nut rotatably attached to a push-pull base via a bearing; and an inner ball screw attached to the inner draw bar via a bearing and a spring, and is configured so that the inner ball screw is caused to slide when an inner motor drives and rotates the inner push-pull nut and so that the inner draw bar is pushed and pulled by the inner ball screw.

25. A tool holder comprising: a holder base and an outer grasped part, wherein
the holder base is able to hold a tool,
the outer grasped part is configured with an outer pull stud including an outer head and an outer neck, and
the outer pull stud has a hole through which an inner pull stud serving as an inner grasped part can penetrate.

26. A tool holder comprising: a holder base and an outer grasped part, wherein
the holder base is able to hold a tool,
the outer grasped part is formed as a substantially circular cylindrical part that has a grasped groove formed on an inner surface thereof, and
a rear sloped surface is provided on a rear side of the grasped groove.

27. The tool holder according to claim 25 or 26, wherein
the holder base has a tapered outer surface and further has a front abutted surface on a front side of the tapered outer surface.

28. The tool holder according to claim 25 or 26, wherein
the holder base has a tapered inner surface and further has a rear abutted surface on a rear side of the tapered inner surface.

29. A chuck holder comprising: a holder base, an outer grasped part, and an inner grasped part, wherein
the holder base is able to have a chuck attached thereto,
the outer grasped part is configured with an outer pull stud including an outer head and an outer neck, whereas the inner grasped part is configured with an inner pull stud including an inner head and an inner neck, and
the inner pull stud is attached so as to penetrate through holes provided in the outer pull stud and in the holder base so that the inner pull stud is connectable to a jaw slide of the chuck.

30. A chuck holder comprising: a holder base, an outer grasped part, and an inner grasped part, wherein
the holder base is able to have a chuck attached thereto,
the outer grasped part is formed as a substantially circular cylindrical part that has a grasped groove formed on an inner surface thereof, whereas the inner grasped part is configured with an inner pull stud including an inner head and an inner neck, and
a rear sloped surface is provided on a rear side of the grasped groove in the substantially circular cylindrical part, and the inner pull stud is attached so as to penetrate through holes provided in the substantially circular cylindrical part and in the holder base so that the inner pull stud is connectable to a jaw slide of the chuck.

31. The chuck holder according to claim 29 or 30, wherein
the holder base has a tapered outer surface and further has a front abutted surface on a front side of the tapered outer surface.

32. The chuck holder according to claim 29 or 30, wherein
the holder base has a tapered inner surface and further has a rear abutted surface on a rear side of the tapered inner surface.

33. A clamp holder comprising: a holder base, an outer grasped part, and an inner grasped part, wherein
the holder base is able to have a clamp mechanism attached thereto,
the outer grasped part is configured with an outer pull stud including an outer head and an outer neck, whereas the inner grasped part is configured with an inner pull stud including an inner head and an inner neck, and
the inner pull stud is attached so as to penetrate through holes provided in the outer pull stud and in the holder base so that the inner pull stud is connectable to a slide of the clamp mechanism.

34. A clamp holder comprising: a holder base, an outer grasped part, and an inner grasped part, wherein
the holder base is able to have a clamp mechanism attached thereto,
the outer grasped part is formed as a substantially circular cylindrical part that has a grasped groove formed on an inner surface thereof, whereas the inner grasped is configured with an inner pull stud including an inner head and an inner neck, and
a rear sloped surface is provided on a rear side of the grasped groove in the substantially circular cylindrical part, and the inner pull stud is attached so as to penetrate through holes provided in the substantially circular cylindrical part and in the holder base so that the inner pull stud is connectable to a slide of the clamp mechanism.

35. The clamp holder according to claim 33 or 34, wherein
the holder base has a tapered outer surface and further has a front abutted surface on a front side of the tapered outer surface.

36. The clamp holder according to claim 33 or 34, wherein
the holder base has a tapered inner surface and further has a rear abutted surface on a rear side of the tapered inner surface.

37. A set made up of a clamp holder and a clamp mechanism, wherein
the clamp holder is one of the following clamp holders:
the clamp holder according to claim 33 or 34;
the clamp holder according to claim 33 or 34, wherein the holder base has a tapered outer surface and further has a front abutted surface on a front side of the tapered outer surface; and
the clamp holder according to claim 33 or 34, wherein the holder base has a tapered inner surface and further has a rear abutted surface on a rear side of the tapered inner surface,
the clamp mechanism comprises: a clamp base; a slide that moves in conjunction with a front-and-back-direction movement of the inner pull stud included in the clamp holder; a reversing frame that reverses in conjunction with a front-and-back direction movement of the slide; a moving block that moves in a front-and-back direction in conjunction with the reversing of the reversing frame; and a clamp arm that reverses in conjunction with the movement of the moving block, and
the clamp mechanism is configured so that, when the inner pull stud included in the clamp holder is moved in the front-and-back direction, a clamp surface of the clamp arm presses a workpiece against the clamp base.

38. A Computerized Numerical Control (CNC) machine tool comprising: a main-spindle; a Z-axis moving mechanism that moves the main-spindle in a Z-axis direction, which is an axial direction of the main-spindle; and one or both of an X-axis moving mechanism and a Y-axis moving mechanism, the X-axis moving mechanism being configured so as to move the main-spindle shaft in an X-axis direction, which is a direction perpendicular to the Z-axis, and the Y-axis moving mechanism being configured so as to move the main-spindle in a Y-axis direction, which is a direction perpendicular to the Z-axis and the X-axis, wherein
the CNC machine tool exercises numerical control over the movements of the Z-axis moving mechanism, the X-axis moving mechanism, and the Y-axis moving mechanism, and
the main-spindle is one of the following main shafts:
the main-spindle according to claim 17 or 18;
the main-spindle according to claim 17 or 18, wherein, in the double push-pull mechanism, the outer push-pull mechanism is an outer cylinder, whereas the inner push-pull mechanism is an inner cylinder; and
the main-spindle according to claim 17 or 18, wherein, in the double push-pull mechanism, the outer push-pull mechanism is an outer electric cylinder, whereas the inner push-pull mechanism is an inner electric cylinder, and the outer electric cylinder is configured so as to include: an outer push-pull nut rotatably attached to a push-pull base via a bearing; and an outer ball screw attached to the outer draw bar via a bearing and a spring, and is configured so that the outer ball screw is caused to slide when an outer motor drives and rotates the outer push-pull nut and so that the outer draw bar is pushed and pulled by the outer ball screw, while the inner electric cylinder is configured so as to include: an inner push-pull nut rotatably attached to a push-pull base via a bearing; and an inner ball screw attached to the inner draw bar via a bearing and a spring, and is configured so that the inner ball screw is caused to slide when an inner motor drives and rotates the inner push-puil nut and so that the inner draw bar is pushed and pulled by the inner ball screw.

39. A set made up of main-spindles, wherein
a first main-spindle is provided so as to be movable along three axes of an X-axis, a Y-axis, and a Z-axis, and numerical control is exercised over movements along the three axes,
a set made up of a second main-spindle and a third main-spindle is further provided, and the second main-spindle and the third main-spindle in the set share a same shaft center, and
one or both of the second and the third main-spindles are movable in a direction of the shaft center.

40. A set made up of main-spindles and a holder holding device, wherein
a first main-spindle is provided so as to be movable along three axes of an X-axis, a Y-axis, and a Z-axis, and numerical control is exercised over movements along the three axes,
a set made up of a second main-spindle and the holder holding device is further provided, and the second main-spindle and the holder holding device in the set share a same shaft center, and
one or both of the second main-spindle and the holder holding device are movable in a direction of the shaft center.

41. A set made up of main-spindles and a swinging mechanism, wherein
a first main-spindle is provided so as to be movable along three axes of an X-axis, a Y-axis, and a Z-axis, and numerical control is exercised over movements along the three axes,
a set made up of a second main-spindle and a third main-spindle is further provided, and the second main-spindle and the third main-spindle in the set share a same shaft center,
the swinging mechanism is formed by attaching a different one of swinging holders to each of the second and the third main-spindles and attaching a swinging base between the swinging holder attached to the second main-spindle and the swinging holder attached to the third main-spindle, and
a fourth main-spindle is further attached to the swinging base, in such a manner that the first main-spindle and the fourth main-spindle oppose each other.

42. A Computerized Numerical Control (CNC) machine tool comprising one of the following sets:
the set made up of the main-spindles according to claim 39; the set made up of the main-spindles and the holder holding mechanism according to claim 40; and
the set made up of the main-spindles and the swinging mechanism according to claim 41.

43. A double push-pull mechanism for pushing and pulling a double pushed-pulled member including an outer pushed-pulled member and an inner pushed-pulled member, the double push-pull mechanism comprising: an outer push-pull mechanism configured with an outer electric cylinder and an inner push-pull mechanism configured with an inner electric cylinder, wherein
the outer electric cylinder is configured so as to include: an outer push-pull nut rotatably attached to a push-pull base via a bearing; and an outer ball screw attached to an outer draw bar via a bearing and a spring, and is configured so that the outer ball screw is caused to slide when an outer motor drives and rotates the outer push-pull nut and so that the outer pushed-pulled member is pushed and pulled by the outer ball screw, and
the inner electric cylinder is configured so as to include: an inner push-pull nut rotatably attached to a push-pull base via a bearing; and an inner ball screw attached to an inner draw bar via a bearing and a spring, and is configured so that the inner ball screw is caused to slide when an inner motor drives and rotates the inner push-pull nut and so that the inner pushed-pulled member is pushed and pulled by the inner ball screw.

44. A spindle wherein
an inner sleeve having a tapered inner surface is attached to a position near an end on a front side of a bore in a shaft of the spindle, and a spring is further attached to a rear side of the inner sleeve, so that a vicinity of an end of the shaft is formed as a tapered bore by the tapered inner surface of the inner sleeve.

45. A spindle wherein
an outer sleeve having a tapered outer surface is attached to an outer circumference near an end on a front side of a shaft of the spindle, and a spring is further attached to a rear side of the outer sleeve.

46. A holder holding mechanism wherein
an inner sleeve having a tapered inner surface is attached to a position near an end on a front side of a bore in a holding base, and a spring is further attached to a rear side of the inner sleeve, so that a vicinity of an end of the holding base is formed as a tapered bore by the tapered inner surface of the inner sleeve.

47. A holder holding mechanism wherein
an outer sleeve having a tapered outer surface is attached to an outer circumference near an end on a front side of a holding base, and a spring is further attached to a rear side of the outer sleeve.
